# EUROPÄISCHE PATENTANMELDUNG

(11) **EP 4 005 859 A1**
(43) Veröffentlichungstag der Anmeldung: **01.06.2022**
(21) Anmeldenummer: 20210651.4
(22) Anmeldetag: 30.11.2020
(51) Int. Cl.: B60L 53/63, B60L 53/66, B60L 53/67, B60L 53/68, B60L 55/00, B60L 58/12, G06Q 50/06, H02J 3/14

(54) **VERFAHREN ZUM STEUERN EINER AUSTAUSCHLEISTUNG ZWISCHEN EINER LADEINFRASTRUKTUR UND EINEM ELEKTRISCHEN VERSORGUNGSNETZ**

(71) Anmelder: Wobben Properties GmbH, 26607 Aurich (DE)
(72) Erfinder: Brombach, Johannes, 13437 Berlin (DE)
(74) Vertreter: Eisenführ Speiser

(57) **Zusammenfassung**

Die Erfindung betrifft ein Verfahren zum Steuern einer Austauschleistung zwischen einer Ladeinfrastruktur und einem elektrischen Versorgungsnetz, wobei mehrere Leistungseinheiten zum Abgeben oder Aufnehmen elektrischer Leistung an die Ladeinfrastruktur anschließbar sind, um elektrische Leistung zwischen den Leistungseinheiten und dem elektrischen Versorgungsnetz über die Ladeinfrastruktur auszutauschen, und mehrere der Leistungseinheiten jeweils als Elektrofahrzeug (351-355) ausgebildet sind, sodass mehrere Elektrofahrzeuge jeweils an die Ladeinfrastruktur anschließbar sind, um elektrische Leistung zwischen den Elektrofahrzeugen und dem elektrischen Versorgungsnetz über die Ladeinfrastruktur auszutauschen und die Elektrofahrzeuge dadurch zu laden oder zu entladen, umfassend die Schritte Bestimmen einer Energievorgabe für einen Steuerzeitraum, die wenigstens die Energiemenge vorgibt, die die Ladeinfrastruktur in dem Steuerzeitraum aus dem elektrischen Versorgungsnetz beziehen soll, Vorgeben einer Leistungsbegrenzung, die wenigstens eine Grenze für die Austauschleistung angibt, die von der Ladeinfrastruktur bereitgestellt werden kann, Vorgeben eines Austauschleistungsverlaufs (P(t)) in Abhängigkeit von der Energievorgabe (E(t)) und der Leistungsbegrenzung, wobei der Austauschleistungsverlauf für die Ladeinfrastruktur einen zeitlichen Verlauf der Austauschleistung für den Steuerzeitraum vorgibt, Bestimmen von Teilaustauschleistungen für die Leistungseinheiten, die jeweils von der Leistungseinheit bereitzustellen ist, wobei die Summe der Teilaustauschleistungen der Austauschleistung im Wesentlichen entspricht, das Bestimmen der Teilaustauschleistungen in Abhängigkeit von Ladezuständen der Leistungseinheiten erfolgt und das Bestimmen der Teilaustauschleistungen unter Berücksichtigung von Teilleistungsgrenzen der Leistungseinheiten erfolgt, und Bereitstellen der Teilaustauschleistungen durch die Leistungseinheiten, um dadurch die Austauschleistung zwischen der Ladeinfrastruktur und dem elektrischen Versorgungsnetz bereitzustellen.

## Beschreibung

Die vorliegende Erfindung betrifft ein Verfahren zum Steuern einer Austauschleistung zwischen einer Ladeinfrastruktur und einem elektrischen Versorgungsnetz und die Erfindung betrifft eine entsprechende Ladeinfrastruktur. Die Erfindung betrifft auch eine Ladestation zum Laden von Elektrofahrzeugen, die eine solche Ladeinfrastruktur aufweist.

Besonders zum Laden einer Fahrzeugflotte aus Elektrofahrzeugen ist eine Ladeinfrastruktur erforderlich. An einer solchen Ladeinfrastruktur sind die Elektrofahrzeuge somit zum Laden ihrer Elektrospeicher angeschlossen. Zum Ausführen ihrer Fahrtätigkeit werden die Elektrofahrzeuge von der Ladeinfrastruktur getrennt. Ein typischer Zyklus eines solchen Systems aus Ladeinfrastruktur und Elektrofahrzeugen kann so aussehen, dass Elektrofahrzeuge, zum Beispiel eine Flotte aus Elektrobussen, tagsüber im Einsatz sind, und dann abends zum Laden zurückkehren, zum Beispiel an den Betriebshof. Auf dem Betriebshof kann die Ladeinfrastruktur installiert sein mit diversen Ladeterminals, nämlich einem Ladeterminal je Elektrofahrzeug. Die Ladeinfrastruktur kann aber auch über mehrere Betriebshöfe verteilt sein, um bei diesem Beispiel zu bleiben. Eine solche Fahrzeugflotte benötigt vergleichsweise viel Energie, um wieder aufgeladen zu werden. Es kann daher sinnvoll sein, diese Energie in einem zentralen Vorgang zu beschaffen. Hierbei können besonders Zeiträume ausgenutzt werden, in denen kein Engpass vorliegt bzw. es können zum Laden der Elektrofahrzeuge Spitzenzeiten des Stromverbrauchs vermieden werden. Dadurch kann das Stromnetz, also das elektrische Versorgungsnetz, entlastet werden, es können aber auch Preisvorteile erreicht werden.

In Spitzenstromzeiten ist es sogar möglich, dass die Elektrospeicher der Fahrzeugflotte über die Ladeinfrastruktur elektrische Leistung bzw. elektrische Energie dem elektrischen Versorgungsnetz zur Verfügung stellen. Die Interaktion zwischen den Elektrospeichern der Elektrofahrzeuge und dem elektrischen Versorgungsnetz und damit die Interaktion der Ladeinfrastruktur mit dem elektrischen Versorgungsnetz betrifft somit nicht nur das Aufnehmen elektrischer Leistung aus dem elektrischen Versorgungsnetz, sondern kann auch das Einspeisen elektrischer Leistung in das elektrische Versorgungsnetz betreffen.

Problematisch bei einem solchen Konzept ist aber, es konkret umzusetzen. Die Elektrofahrzeuge kommen zu unterschiedlichen Zeiten zurück zum Laden und diese unterschiedlichen Zeiten können regelmäßig auch unbestimmt sein. Häufig kann zwar ein Fahrplan oder Dienstplan vorliegen, auf Grund von Verkehrssituationen ist aber häufig mit Abweichungen zu rechnen. Gleiches gilt auch für die Versorgungssituation im elektrischen Versorgungsnetz, die aus anderen Gründen variabel ist. Mit anderen Worten ist ein variabler und teilweise unbekannter Bedarf durch die Elektrofahrzeuge einschließlich Variabilität und Ungewissheit ihrer Verfügbarkeit mit variabler und teilweiser unbekannter Versorgungslage oder sogar Bedarfslage des elektrischen Versorgungsnetzes zu koordinieren.

Der vorliegenden Erfindung liegt somit die Aufgabe zugrunde, zumindest eins der oben genannten Probleme zu adressieren. Insbesondere soll eine Lösung geschaffen werden, das Laden von Elektrofahrzeugen unter Berücksichtigung einer Versorgungssituation in dem elektrischen Versorgungsnetz zu Steuern, Zumindest soll zu bisher bekannten Lösungen eine alternative Lösung vorgeschlagen werden.

Erfindungsgemäß wird ein Verfahren nach Anspruch 1 vorgeschlagen. Demnach wird ein Verfahren zum Steuern einer Austauschleistung zwischen einer Ladeinfrastruktur und einem elektrischen Versorgungsnetz vorgeschlagen. Die Ladeinfrastruktur ist insoweit eine Infrastruktur, über die mehrere Elektrofahrzeuge an das elektrische Versorgungsnetz angeschlossen sind. Dabei sind mehrere Leistungseinheiten vorgesehen, die zum Abgeben oder aufnehmen elektrischer Leistung an die Ladeinfrastruktur anschließbar sind. Dadurch kann elektrische Leistung zwischen den Leistungseinheiten und dem elektrischen Versorgungsnetz über die Ladeinfrastruktur ausgetauscht werden.

Mehrere der Leistungseinheiten sind jeweils als Elektrofahrzeuge ausgebildet, sodass mehrere Elektrofahrzeuge jeweils an die Ladeinfrastruktur anschließbar sind, um elektrische Leistung zwischen den Elektrofahrzeugen und dem elektrischen Versorgungsnetz über die Ladeinfrastruktur auszutauschen und Elektrofahrzeuge dadurch zu Laden oder zu Entladen.

Im Wesentlichen werden die Elektrofahrzeuge durch ihre Fahrtätigkeit entladen. Sie können aber auch, wenn sie zum Laden an die Ladeinfrastruktur gekommen sind, noch eine Restladung aufweisen oder nach einem Teilladevorgang eine Ladung aufweisen, die temporär zum Stützen des elektrischen Versorgungsnetzes oder auch zum Laden eines anderen benachbarten Speichers (Umladen) verwendet werden kann. Besonders in einem solchen Fall wird das Elektrofahrzeug dann zumindest teilweise über die Ladeinfrastruktur entladen. Das letztendliche Ziel ist es aber, dass das Elektrofahrzeug aufgeladen wird, bzw. sein Elektrospeicher, um dann wieder fahrbereit zu sein.

Das auf dieser Struktur basierende Verfahren bzw. das diese Struktur steuernde Verfahren umfasst somit zumindest die Schritte des Anspruchs 1. Demnach wird eine Energievorgabe für einen Steuerzeitraum bestimmt, die wenigstens die Energiemenge vorgibt, die die Ladeinfrastruktur in dem Steuerzeitraum aus dem elektrischen Versorgungsnetz beziehen soll. Diese Energiemenge kann besonders als Energiebedarf der Ladeinfrastruktur zum Laden der Elektrofahrzeuge ermittelt werden. Sie kann als Ladeenergiebedarf bezeichnet werden.

Es wird also wenigstens die Energiemenge zusammen mit dem Steuerzeitraum vorgegeben. Die Energievorgabe kann aber auch einen zeitlichen Energiebereich vorgeben, der nämlich durch eine zeitliche Obergrenze und eine zeitliche Untergrenze einen Bereich für den Steuerzeitraum angibt, und festlegt, wie viel Energie wann maximal bezogen werden darf und minimal bezogen werden soll. Hier wurde erkannt, dass der Steuerzeitraum, der eine ganze Nacht betreffen kann, meist so lang ist, dass die Energie zum Laden der Elektrofahrzeuge nicht sofort bereitgestellt werden muss, sondern sich an für das elektrische Versorgungsnetz sinnvolle Zeiten anpassen kann. Dafür muss diese Information aber bekannt sein und die wird durch die Energievorgabe somit bereitgestellt.

Zum Beziehen der Energie muss Leistung übertragen werden und es wurde erkannt, dass dafür Grenzen existieren können. Diese Grenzen können aber variabel sein und sollten bereits vorab bei der Planung berücksichtigt werden. Daher wird das Vorgeben einer Leistungsbegrenzung vorgeschlagen, die wenigstens eine Grenze für die Austauschleistung angibt, die von der Ladeinfrastruktur bereitgestellt werden kann. Insbesondere kann eine Obergrenze und eine Untergrenze vorgegeben werden, die auch zeitlich variieren können. In dem Fall können sie jeweils als zeitlicher Verlauf der Obergrenze und der Untergrenze vorgegeben werden.

Es wird besonders berücksichtigt, dass elektrische Verbindungsknoten oder Anschlussstellen in ihrer Leistung begrenzt sein können. Auch die Elektrospeicher können nicht mit beliebig hoher Leistung geladen werden. All dies kann die vorgegebene Leistungsbegrenzung berücksichtigen.

Es gibt also viele Möglichkeiten, das Laden des Elektrofahrzeugs konkret zu gestalten, nämlich darüber wann wie viel Leistung zwischen dem Elektrofahrzeug und dem elektrischen Versorgungsnetz ausgetauscht wird. Durch die Energievorgabe und die Leistungsbegrenzung wird dafür ein Rahmen vorgegeben, der bereits bei der Planung berücksichtigt werden kann.

Das Verfahren betrifft aber nicht das Laden eines Einzelfahrzeugs, sondern das Laden mehrerer Elektrofahrzeuge. Für jedes Elektrofahrzeug kann ein solcher Rahmen vorgegeben werden, wobei das Verfahren vorschlägt, einen solchen Rahmen nämlich die Energievorgabe und die Leistungsbegrenzung, als Gesamtvorgabe für alle angeschlossenen Elektrofahrzeuge vorzugeben und damit für die Ladeinfrastruktur vorzugeben.

Darauf basierend wird dann ein Austauschleistungsverlauf vorgegeben, nämlich in Abhängigkeit von der Energievorgabe und der Leistungsbegrenzung. Der Austauschleistungsverlauf gibt für die Ladeinfrastruktur einen zeitlichen Verlauf der Austauschleistung vor. Der Austauschleistungsverlauf gibt also für den Steuerzeitraum vor, wann wie viel Leistung von der Ladeinfrastruktur aus dem elektrischen Versorgungsnetz entnommen, oder in dieses eingespeist wird.

Diese Vorgabe des Austauschleistungsverlaufs erfolgt so, dass der Austauschleistungsverlauf in dem vorgegebenen Steuerzeitraum liegt und die Energievorgabe und die Leistungsbegrenzung eingehalten werden. Hierdurch wird besonders einer externen Einheit ermöglicht, den Austauschleistungsverlauf vorzugeben. Hier kommt besonders in Betracht, dass eine Steuereinheit der Ladeinfrastruktur die Energievorgabe bestimmt und die Leistungsbegrenzung vorgibt und an einen Netzbetreiber oder einen Stromvermarkter im Netz übergibt und dieser den Austauschleistungsverlauf vorgibt, nämlich im Rahmen der Energievorgabe und der Leistungsbegrenzung, den er dabei zu beachten hat.

Wird der Austauschleistungsverlauf über die Zeit, nämlich besonders über den Steuerzeitraum integriert, ergibt sich eine Energiemenge, die aus dem elektrischen Versorgungsnetzes zum Laden der Elektrofahrzeuge abgerufen wird. Eine solche Energiemenge, die auch als Ladeenergiebedarf oder synonym als Ladeenergiemenge oder einfach Ladeenergie bezeichnet werden kann, ist in der Energievorgabe berücksichtigt.

Es werden dann Teilaustauschleistungen für die Leistungseinheiten bestimmt, die jeweils von der Leistungseinheit bereitzustellen ist, wobei die Summe der Teilaustauschleistungen der Austauschleistung im Wesentlichen entspricht. Besonders entspricht die Summe der Teilaustauschleistungen der Austauschleistung, wenn Verluste vernachlässigt werden können.

Das Bestimmen der Teilaustauschleistungen erfolgt in Abhängigkeit von Ladezuständen der Leistungseinheiten und unter Berücksichtigung von Teilleistungsgrenzen der Leistungseinheiten. Hier wurde besonders erkannt, dass es nicht ausreicht, die Austauschleistung einfach nur proportional zur Speichergröße aufzuteilen, sondern dass eine Berücksichtigung von Leistungsbegrenzungen der einzelnen Leistungseinheiten sinnvoll ist. Zudem wurde erkannt, dass eine Betrachtung von Leistungsgrenzen der Ladeinfrastruktur insgesamt zu wenig oder zu ungenau sein kann, bzw. dass solche Leistungsgrenzen variieren können, nämlich in Abhängigkeit von den einzelnen Leistungseinheiten.

Schließlich erfolgt das Bereitstellen der Teilaustauschleistungen durch die Leistungseinheiten, um dadurch die Austauschleistung zwischen der Ladeinfrastruktur und dem elektrischen Versorgungsnetz bereitzustellen.

Im einfachsten Fall gibt also jede Leistungseinheit genauso viel Teilaustauschleistung ab, bzw. nimmt sie auf, wie durch die Vorgabe der jeweiligen Teilaustauschleistung vorgesehen ist. Es kommt aber in Betracht, dass das Bereitstellen einer solchen Teilaustauschleistung während des Zeitraums der Bereitstellung noch verändert wird, wenn sich beispielsweise herausstellt, dass sich eine Leistungseinheit besonders aufgrund von Verlusten nicht so schnell auflädt, wie dies bei den Vorgaben angenommen wurde.

Das Verfahren gibt also durch die Energievorgabe und die Leistungsbegrenzung den Rahmen für die Austauschleistung vor. In diesem Rahmen wird ein konkreter Leistungsverlauf festgelegt, nämlich der Austauschleistungsverlauf. Dieser wird dann im Einzelnen auf die einzelnen Elektrofahrzeuge umgelegt, indem nämlich basierend auf dem Austauschleistungsverlauf Teilaustauschleistungen ermittelt werden. Dadurch kann die Austauschleistung zwischen der Infrastruktur und dem elektrischen Versorgungsnetz gesteuert werden.

Hier ist somit eine Besonderheit, dass nicht die einzelnen Elektrofahrzeuge selbstständig Leistung beziehen, sondern dass das koordiniert wird und dass es auch vorausgeplant wird. Besonders der Austauschleistungsverlauf kann daher auch als geplanter Austauschleistungsverlauf bezeichnet werden.

Gemäß einem Aspekt ist vorgesehen, dass die Teilleistungsgrenzen variabel sind und in Abhängigkeit von Ladezuständen der jeweiligen Leistungseinheiten bestimmt werden. Besonders wurde erkannt, dass die Teilleistungsgrenzen von den Ladezuständen der jeweiligen Leistungseinheiten abhängen und die Aufteilung der Austauschleistung auf die Leistungseinheiten das gut berücksichtigen kann und damit die Leistungsaufteilung verbessern kann.

Außerdem oder alternativ wird vorgeschlagen, die Teilaustauschleistungen als Teilleistungsverläufe Pi(t) in Abhängigkeit von dem Austauschleistungsverlauf, vorzugeben.

Es werden somit Teilleistungsverläufe in Abhängigkeit von dem Austauschleistungsverlauf bestimmt. Diese Teilleistungsverläufe geben jeweils für eine der Leistungseinheiten einen zeitlichen Verlauf einer Austauschleistung in dem Steuerzeitraum vor. Die Summe aller Teilleistungsverläufe bildet dann den Austauschleistungsverlauf, jedenfalls theoretisch, wenn Verlustleistungen vernachlässigt werden.

Eine Möglichkeit, die Teilleistungsverläufe zu berechnen, besteht beispielsweise darin, dass die Werte des Austauschleistungsverlaufs durch die Anzahl der Leistungseinheiten geteilt werden, unter Berücksichtigung der Teilleistungsgrenzen. Werden hierbei Teilleistungsgrenzen erreicht, kann sich in einem ersten Schritt eine Überschussleistung ergeben, die aufgrund wenigstens einer Teilleistungsgrenze wenigstens nicht an eine der Leistungseinheiten verteilt werden konnte. Diese Überschussleistung kann dann an die übrigen Leistungseinheiten aufgeteilt werden, die keine Teilleistungsgrenze erreicht haben.

Sind die Leistungseinheiten aber unterschiedlich groß oder weisen unterschiedliche Ladezustände auf, oder beides, so können diese Größen entsprechend mit einberechnet werden. Beispielsweise könnte für jede Leistungseinheit zu Beginn des Steuerzeitraums ihr Energiebedarf zum vollständigen Laden ermittelt werden und gegenübergestellt werden. Beispielsweise könnte die Summe aus all diesen Energiebedarfen gebildet werden und jede Leistungseinheit erhält dann jeweils einen Leistungsanteil von der Gesamtaustauschleistung, der den Anteil ihres Energiebedarfs an der Summe aller Energiebedarfe entspricht, um ein weiteres Beispiel zu nennen. Ergibt sich eine Überschussleistung, weil wenigstens eine Teilleistungsgrenze erreicht wurde, kann für die Überschussleistung diese Aufteilung für die verbleibenden Leistungseinheiten wiederholt werden.

Es wird also vorgeschlagen, dass das Bestimmen der Energievorgabe und/oder das Vorgeben des Austauschleistungsverlaufs P(t) in Abhängigkeit von Ladezuständen der Leistungseinheiten erfolgt. Dabei ist aus den Ladezuständen der Leistungseinheiten, soweit sie an die Ladeinfrastruktur angeschlossen sind, ein Gesamtladezustand bestimmbar. Hiervon geht dieser Aspekt aus und schlägt vor, für den Gesamtladezustand einen zeitlichen Verlauf eines Ladezustandsbereichs als Flexibilitätsbereich vorzugeben.

Der Flexibilitätsbereich wird durch einen zeitlichen Verlauf einer Obergrenze des Gesamtladezustands und einen zeitlichen Verlauf einer Untergrenze des Gesamtladezustands für den Steuerzeitraum aufgespannt. Für die Gesamtheit aller angeschlossenen Leistungseinheiten gibt dieser Flexibilitätsbereich somit einen Ladezustandsbereich an. Der zeitliche Verlauf kann danach so aussehen, dass die Obergrenze und die Untergrenze an einem gemeinsamen Punkt starten, der somit nämlich den in dem Moment aktuellen Gesamtladezustand entspricht. Von hier aus kann die Untergrenze mit der Zeit auf einen Minimalwert abfallen der der Situation entsprechen kann, wenn alle Leistungseinheiten entladen sind, bzw. soweit entladen sind, wie dies ohne Schädigung technisch noch vertretbar ist. Mit zunehmender Zeit steigt diese Untergrenze dann wieder an, da am Ende der Zeitperiode die Leistungseinheiten bzw. ihre Elektrospeicher im Wesentlichen geladen sein sollten.

Die Obergrenze kann hingegen von vornherein ansteigen, nämlich Idealisierend auf den Wert, der einer Vollladung sämtlicher betroffener Elektrospeicher entspricht. Es kommt aber auch in Betracht, dass beide Grenzen nicht von dem selben Punkt starten, wenn sie nämlich zu einem Zeitpunkt bestimmt werden, zu dem noch nicht bekannt ist, wie der tatsächliche Gesamtladezustand aussehen wird. Unsicherheiten ergeben sich für den Gesamtladezustand besonders dadurch, dass nur abgeschätzt werden kann, mit welchem Teilladezustand an die Ladeinfrastruktur zurückgekehrt werden kann. Es kommt aber auch in Betracht, dass beispielsweise ein Elektrofahrzeug zu spät zurückkehrt und somit zu Beginn des Flexibilitätsbereichs noch nicht berücksichtigt werden kann.

Diese Unter- und Obergrenzen, die diesen Flexibilitätsraum aufspannen, weisen besonders am Anfang und am Ende Steigungen auf, die berücksichtigen, dass die betroffenen Elektrospeicher nicht beliebig schnell entladen oder aufgeladen werden können.

Der Flexibilitätsbereich spiegelt somit die insgesamt verfügbare Ladekapazität wieder und berücksichtigt dabei Anfangsladezustände bzw. zu erwartende Anfangsladezustände und auch die erforderliche Dynamik des Ladens und Entladens. Der Flexibilitätsbereich gibt damit auf einfache Art und Weise ein Gesamtbild wieder, dass all diese Informationen beinhaltet und dabei fürdieses Gesamtbild fürdie gesamte Ladeinfrastrukturzusammenfasst.

Das Bestimmen der Energievorgabe und/oder das Vorgeben des Austauschleistungsverlaufs (P(t)) erfolgt dann in Abhängigkeit von diesen Flexibilitätsbereichen. Hier wurde besonders erkannt, dass der Flexibilitätsbereich eine interne Information der Ladeinfrastruktur ist. Besonders ein Netzbetreiber oder Netzvermarkter ist mit den internen Randbedingungen der Infrastruktur nicht vertraut. So ist dem Flexibilitätsbereich besonders nicht abzulesen, wie stark oder schnell diese Ladung verändert werden kann. Daher wird vorgeschlagen, das Bestimmen der Energievorgabe und/oder das Vorgeben des Austauschleistungsverlaufs (P(t)) aus diesem Flexibilitätsbereich abzuleiten. Dabei können solche Randbedingungen berücksichtigt werden. Besonders die Geschwindigkeit, mit der die einzelnen Elektrospeicher geladen oder entladen werden können und damit die Geschwindigkeit, mit der der Gesamtladezustand verändert werden kann, entspricht einem Leistungswert. Dadurch weist der Austauschbereich auch entsprechend Ober- und Untergrenzen auf, die diese Randbedingungen widerspiegeln.

Es kommt aber auch in Betracht, dass der Flexibilitätsbereich selbst zur Berücksichtigung bereitgestellt wird, oder eine äquivalente Information, wie ein Energiebereich, der dem Flexibilitätsbereich entspricht, aber statt Ladezuständen entsprechende Energiewerte aufweist. Der Flexibilitätsbereich oder die äquivalente Information kann dabei extern bereitgestellt werden, also an eine externe Einheit wie ein Netzbetreiber.

Insbesondere wird hier vorgeschlagen, dass der Steuerzeitraum an einem Zeitpunkt endet und die Obergrenze des Gesamtladezustands an diesem Zielzeitpunkt größer ist als die Untergrenze des Gesamtladezustands. Der Flexibilitätsbereich weist also am Zielzeitpunkt, also an seinem zeitlichen Ende, gemäß diesem Aspekt einen Korridor auf, in dem der Gesamtladezustand schwanken darf. Hier wurde besonders erkannt, dass es häufig ausreichen kann, dass die Elektrospeicher der Elektrofahrzeuge zu Beginn ihrer Fahrt beispielsweise nur 90% Ladung aufweisen, statt 100% Ladung. Dies kann als Variationsbereich weitergegeben werden. Dadurch wird die Möglichkeit eröffnet, auch die Planung des vorgesehenen Leistungsaustausches etwas flexibler zu gestalten, bzw. eine Abweichung vom Zielladezustand zu erlauben ohne den Leistungsaustausch zu verstellen, wenn Rahmenbedingungen zu einer Abweichung führen würden.

Gemäß einem Aspekt wird vorgeschlagen, dass das Bestimmen der Teilaustauschleistungen jeweils in Abhängigkeit von einer Abweichung des Ladezustands der jeweiligen Leistungseinheit von einem relativen mittleren Ladezustand erfolgt, wobei das Bestimmen so erfolgt, dass der jeweilige Ladezustand dem mittleren Ladezustand angeglichen wird. Es wird also vorgeschlagen, dass nicht alle Speicher der Leistungseinheiten gleich schnell gemessen an ihrer Speichergröße geladen werden, sondern dass versucht wird, die relativen Ladezustände anzugleichen. Relative Ladezustände können besonders in % angegeben werden. Hat also bspw. ein Speicher einen Ladezustand von 30%, wird er schneller geladen, als einer mit 80%. Der Speicher mit 30% kann bspw., zuerst geladen werden, oder stärker.

Hier wurden mehrere Effekte erkannt. Ein Effekt ist, dass Teilleistungsgrenzen nicht so leicht erreicht werden und damit besser ausgenutzt werden können. Am vorigen Beispiel könnte ein gleich starkes Laden beider Speicher, die anfangs einen Ladezustand von 30% bzw. 80% hatten, zu einem Ladezustand von 50% und 100% führen. Dann kann der Speicher mit 100% keine Leistung mehr aufnehmen, ist also an einer Leistungsgrenze. Das führt damit zu einer starken Leistungsbegrenzung auch für die Ladeinfrastruktur insgesamt.

Würde aber der eine Speicher stärker geladen werden, könnte sich zu demselben Zeitpunkt ein Zustand von 65% und 85% einstellen. Der Gesamtladezustand ist derselbe, aber die Leistungsgrenzen sind noch nicht erreicht und damit ist die Leistungsgrenze der Ladeinfrastruktur insgesamt höher, falls zusätzliche Leistung benötigt wird.

Für Vorausplanungen kann mit dem Angleichen zudem auch erreicht werden, dass die insgesamt wirksame Leistungsgrenze für die Ladeinfrastruktur weniger stark streut und zu einem Gesamtladezustand besser eine insgesamt wirksame Leistungsgrenze vorausgesagt werden kann, ohne die Ladezustände der Leistungseinheiten kennen zu müssen, denn das Verfahren vermeidet, dass Leistungseinheiten zu früh und singulär an eine Leistungsgrenze stoßen.

Gemäß einem Aspekt wird vorgeschlagen, dass
- eine positive Teilaustauschleistung, mit der die Leistungseinheit geladen wird, in Abhängigkeit von einer Differenz des Ladezustandes von einem zu erreichenden Ladezustand, insbesondere vollgeladenem Ladezustand bestimmt wird, und
- eine negative Teilaustauschleistung, mit der die Leistungseinheit entladen wird, in Abhängigkeit von einer Differenz des Ladezustandes von einem entladenen Ladezustand, bestimmt wird.

Wenn die Speicher elektrische Leistung aufnehmen, wird die Verteilung der Austauschleistung auf die Leistungseinheiten also so gesteuert, dass die noch zu ladende Energiemenge betrachtet wird. Die wird bei allen Speichern betrachtet und im Idealfall dazu in gleichen Verhältnissen die Austauschleistung aufgeteilt. Die jeweilige Energiemenge kann dabei auch so bestimmt werden, dass jeweils der prozentuale Ladezustand der Speicher, also Leistungseinheiten, betrachtet wird und zudem die Größe des Speichers betrachtet wird.

Die Aufteilung der Austauschleistung erfolgt idealerweise proportional zu der noch zu ladenden Energiemenge. Die Speicher, die also noch, relativ gesehen, am meisten Abstand zum vollgeladenen Zustand haben, werden somit am stärksten geladen. Damit wird auch eine Angleichung erreicht.

Bei einer negativen Teilaustauschleistung, wenn also Energie entladen und ins elektrische Versorgungsnetz eingespeist werden soll, wird aber der Ladezustand betrachtet. Es wird damit nämlich der Abstand des Ladezustands zu einem entladenen Zustand betrachtet. Auch hier kann daran gemessen eine gleichmäßige bzw. proportionale Aufteilung der Austauschleistung erfolgen, nämlich proportional zum Ladezustand. Damit wird für eine negative Austauschleistung ein Angleichen erreicht.

In beiden Fällen kann, wenn dabei Grenzen erreicht werden und damit eine Überschussleistung auftritt, die nach dem gleichen Muster auf die Leistungseinheiten verteilt werden, die nicht an eine Leistungsgrenze gestoßen sind.

Außerdem oder alternativ wird vorgeschlagen, dass
- bei Vorgabe einer positiven Austauschleistung, bei der Leistung aus dem elektrischen Versorgungsnetz zum Laden der Leistungseinheiten entnommen wird, Leistungseinheiten, die einen Ladezustand unterhalb eines bzw. des relativen mittleren Ladezustands aufweisen, vorrangig und/oder stärker geladen werden, als Leistungseinheiten, die einen Ladezustand oberhalb des relativen mittleren Ladezustands aufweisen, und
- bei Vorgabe einer negativen Austauschleistung, bei der Leistung in das elektrische Versorgungsnetz zum Entladen der Leistungseinheiten eingespeist wird, Leistungseinheiten, die einen Ladezustand oberhalb des relativen mittleren Ladezustands aufweisen, vorrangig und/oder stärker entladen werden, als Leistungseinheiten, die einen Ladezustand unterhalb des relativen mittleren Ladezustands aufweisen.

Ein relativer mittlerer Ladezustand ist insbesondere ein prozentualer mittlerer Ladezustand. Er kann der absolute Gesamtladezustand in Bezug auf die Gesamtspeicherkapazität sein. Insbesondere kann der prozentuale Gesamtladezustand den relativen mittleren Ladezustand bilden. Leistungseinheiten, die einen Ladezustand oberhalb oder unterhalb des relativen mittleren Ladezustands aufweisen, sind also solche, deren prozentualer Ladezustand oberhalb oder unterhalb des prozentualen Wertes des Gesamtladezustandes liegt.

Davon abhängig werden die Leistungseinheiten dann vorrangig oder stärker, geladen oder entladen. Ein vorrangiges Laden oder Entladen von Leistungseinheiten kann bedeuten, dass diese zuerst geladen oder entladen werden, insbesondere, bis sie den relativen mittleren Ladezustand erreicht haben. Hierbei kann auch eine Priorisierung vorgesehen werden, bei der diejenigen Leistungseinheiten, die am weitesten vom relativen mittleren Ladezustand entfernt sind, zuerst geladen werden. Es kommt aber auch in Betracht, dass die nur unterschiedlich stark geladen werden, dass also trotz der Unterschiede alle Leistungseinheiten geladen werden. Besonders wird vorgeschlagen, dass die Teilaustauschleistungen jeweils proportional zu einer Differenz zwischen Ladezuständen und dem relativen mittleren Ladezustand, multipliziert mit der jeweiligen Speicherkapazität der Leistungseinheit bestimmt werden.

Hierdurch kann gezielt berücksichtig werden, welche Leistungseinheit stärker oder schwächer geladen oder entladen werden sollten, denn der relative mittlere Ladezustand ist dafür ein gutes Maß.

Gemäß einem Aspekt wird vorgeschlagen, dass
- in Abhängigkeit von dem Austauschleistungsverlauf
- gespeicherte Energie aus Leistungseinheiten mit einem Ladezustand oberhalb des relativen mittleren Ladezustands in Leistungseinheiten mit einem Ladezustand unterhalb des relativen mittleren Ladezustands umgeladen werden.

Hier wurde besonders erkannt, dass der Austauschleistungsverlauf eine hohe Austauschleistung ankündigen kann, die nur realisiert werden kann, wenn dazu alle Leistungseinheiten, also alle Speicher verfügbar sind und nicht an eine Teilleistungsgrenze stoßen. In einem solchen Fall wird vorgeschlagen, zumindest einige Leistungseinheiten, die sehr unterschiedlich stark geladen sind, z.B. 30% und 70%, durch umladen aneinander anzugleichen, hier z.B. auf je 50%, wenn sie gleich groß sind. Das kommt besonders in einem Zeitabschnitt in Betracht, in dem keine Austauschleistung mit dem elektrischen Versorgungsnetz ausgetauscht wird. Dann kann ein Angleichen nämlich nicht durch unterschiedliches Laden oder Entladen erreicht werden. Das Umladen kann aber auch bei geringer Austauschleistung ergänzend zum Angleichen vorgesehen sein.

Gemäß einem Aspekt wird vorgeschlagen, dass ein Leistungsbedarf des elektrischen Versorgungsnetzes als Netzleistungsbedarf für den Steuerzeitraum ermittelt wird. Der Netzleistungsbedarf kann besonders als zeitlicher Verlauf des Leistungsbedarfs ermittelt werden und kann als Netzleistungsbedarfsverlauf bezeichnet werden.

Somit wird vorgeschlagen, dass ein Leistungsbedarf des elektrischen Versorgungsnetzes, zum Beispiel bei Versorgungsspitzen die regelmäßig auftreten und insoweit dem Grunde nach bekannt sind, als auch ein Energiebedarf der Elektrofahrzeuge berücksichtig wird. Das Bestimmen des Austauschleistungsverlaufs erfolgt dann in Abhängigkeit von dem Netzleistungsbedarf und in Abhängigkeit von dem Ladeenergiebedarf.

Betrifft der Steuerzeitraum beispielsweise jeweils eine Nacht, so kann am Anfang dieser Nacht beispielsweise zwischen 18 Uhr und 20 Uhr ein hoher Leistungsbedarf bestehen, der in der Nacht beispielsweise zwischen 0 Uhr und 4 Uhr aber sehr gering ist. Der Austauschleistungsverlauf kann dann so vorgesehen werden, dass, um bei diesem Beispiel zu bleiben, abends zwischen 18 Uhr und 20 Uhr wenig Leistung aus dem elektrischen Versorgungsnetz entnommen wird, ggf. sogar Leistung eingespeist wird, um dadurch das elektrische Versorgungsnetz in diesem Spitzenstrombereich zu unterstützen.

In dem beispielhaft genannten Bereich von 0 Uhr und 4 Uhr besteht hingegen ein geringer Bedarf im elektrischen Versorgungsnetz und daher eignet sich dieser Bereich gut dazu, Leistungen aus dem elektrischen Versorgungsnetz zum Laden der Elektrofahrzeuge zu entnehmen. Entsprechend wird der Austauschleistungsverlauf vorgesehen, weist nämlich geringe oder negative Leistung zu Beginn des Steuerzeitraums bei den hier beispielhaft genannten Zeiten zwischen 18 bis 20 Uhr auf, und große Werte in dem beispielhaft genannten Bereich zwischen 0 Uhr und 4 Uhr. Der Austauschleistungsverlauf wird dabei aber so festgelegt, dass am Ende des Steuerzeitraums die Energievorgabe erfüllt ist und die Leistungsbegrenzung eingehalten wurde.

Gemäß einem Aspekt wird vorgeschlagen, dass die Ladeinfrastruktur an wenigstens einem Netzanschlusspunkt an das elektrische Versorgungsnetz angeschlossen ist, die Austauschleistung zwischen der Ladeinfrastruktur und dem elektrischen Versorgungsnetz über diesen wenigstens einen Netzanschlusspunkt erfolgt und das Bestimmen des Austauschleistungsverlaufs und/oder der Teilleistungsverläufe in Abhängigkeit von wenigstens einer Eigenschaft des wenigstens einen Netzanschlusspunktes erfolgt.

Hier wurde erkannt, dass auch das Laden mehrerer Elektrofahrzeuge durch eine Ladeinfrastruktur, insbesondere das Laden eines Fuhrparks aus Elektrofahrzeugen dazu führen kann, dass eine Belastungsgrenze, insbesondere eine entsprechend vorgegebene Grenze, eines Netzanschlusspunktes erreicht wird. Entsprechend kann das Vorgeben des Austauschleistungsverlaufs dies berücksichtigen.

Wenn die Ladeinfrastruktur so verteilt ist, dass sie mehrere Netzanschlusspunkte verwendet, bedeutet das regelmäßig, dass wenigstens ein Elektrofahrzeug über den einen Netzanschlusspunkt versorgt wird und wenigstens ein anderes Elektrofahrzeug über den weiteren Netzanschlusspunkt versorgt wird. In der Situation kann somit der Austauschleistungsverlaufso ausreichend begrenzt sein, dass sie eine Summe der maximalen Leistungen der Netzanschlusspunkte nicht überschreiten, ohne damit aber sicherzustellen, dass auch eine Begrenzung jedes einzelnen Netzanschlusspunktes eingehalten wird. Durch eine entsprechende Aufteilung der Teilleistungsverläufe kann gewährleistet werden, dass auch die maximalen Leistungen für jeden einzelnen Netzanschlusspunkt eingehalten werden.

Es kommt auch in Betracht, dass die Ladeinfrastruktur über einen Batteriepufferspeicher verfügt, der Energie beim Laden oder Entladen der Elektrofahrzeuge zwischenspeichern kann. In dem Fall kommt in Betracht, dass die Summe der Teilleistungsverläufe in einem Zeitabschnitt eine Leistungsgrenze des Netzanschlusspunktes überschreitet, die über den Netzanschlusspunkt übertragene Leistung gleichwohl nicht überschritten wird, weil ein Teil der Leistung aus dem Batteriepufferspeicher bezogen wird.

Beispielsweise kann ein Elektrofahrzeug durch den Batteriepufferspeicher temporär versorgt werden, insbesondere geladen werden, während die übrigen Elektrofahrzeuge über den Netzanschlusspunkt geladen werden. Entsprechend sind die Teilleistungsverläufe der Elektrofahrzeuge, die über den Netzanschlusspunkt geladen werden, entsprechend zu begrenzen, wohingegen das beispielhaft genannte Elektrofahrzeug, das aus dem Batteriepufferspeicher versorgt wird bei der Begrenzung nicht berücksichtigt zu werden braucht.

Gemäß einem Aspekt wird vorgeschlagen, dass beim Bereitstellen der Teilaustauschleistungen der Gesamtladezustand kontinuierlich mittels einer zentralen Steuereinrichtung überwacht wird und mit dem vorgegebenen Ladezustandsverlauf verglichen wird. In Abhängigkeit von dem Vergleich werden Informationen und/oder Steuerbefehle von der zentralen Steuereinrichtung an die Leistungseinheiten übertragen, um das Bereitstellen der Teilaustauschleistungen nachzuregeln. Somit wird hier vorgeschlagen, dass das Bereitstellen der Teilaustauschleistungen zentral gesteuert wird und auch zentral nachgeregelt wird. Es wird besonders dann nachgeregelt, wenn der Gesamtladezustand von dem vorgegebenen Ladezustandsverlauf oder Ladeziel abweicht. Dann werden die Teilaustauschleistungen angepasst. Die Teilaustauschleistungen betreffen dabei jeweils den einzelnen Ladevorgang der Leistungseinheiten, also insbesondere den Ladevorgang der jeweiligen Elektrofahrzeuge. Dabei ist für jedes Elektrofahrzeug eine entsprechende Ladeeinheit vorgesehen, die das konkrete Laden des jeweiligen Elektrofahrzeugs bzw. des Elektrospeichers durchführt. Diese Ladeeinheit kann grundsätzlich auch Teil des Elektrofahrzeugs sein, ist vorzugsweise aber Teil der Ladeinfrastruktur.

Jedenfalls wird vorgeschlagen, die Teilaustauschleistungen ggf. nachzuregeln und das bedeutet, diese einzelnen Ladesteuerungen entsprechend anzusteuern, um den jeweiligen Ladevorgang zu verstärken oder zu verringern. Der Gesamtladezustand, der dabei überwacht wird, bildet die Führungsgröße.

Es wurde erkannt, dass auch in Betracht kommt, dass die einzelnen Leistungseinheiten, also insbesondere die einzelnen Elektrofahrzeuge bzw. Elektrospeicher sich unterschiedlich verhalten, besonders, dass sie sich anders verhalten als ursprünglich angenommen. So kommt in Betracht, dass sich die Ladezustände der jeweiligen Leistungseinheiten unterschiedlich entwickeln. Somit wird optional vorgeschlagen, dass die Ladezustände der Leistungseinheiten überwacht werden und mit vorgegebenen Ladezuständen verglichen werden, um dadurch Teilabweichungen der Ladezustände der Leistungseinheiten zu erfassen.

Die vorgegebenen Ladezustände können insbesondere gemäß vorgegebenen Ladezustandsverläufen vorgegeben werden. Für jede Leistungseinheit kann also ein Ladezustandsverlauf vorgegeben werden. Eine Teilabweichung der Ladezustände ist somit jeweils die Abweichung eines Ladezustands einer Leistungseinheit von einem vorgegebenen Ladezustand derselben Leistungseinheit. Es wird dazu vorgeschlagen, dass das Bereitstellen der Teilaustauschleistungen zusätzlich in Abhängigkeit von dieser Teilabweichung nachgeregelt wird. Somit soll immer der Gesamtladezustand betrachtet und auch die Gesamtaustauschleistung nachgeregelt werden. Die zusätzliche Betrachtung der einzelnen Abweichungen der Ladezustände der Leistungseinheiten kann aber berücksichtigt werden. Eine Berücksichtigung kann dadurch erfolgen, dass die Aufteilung der Austauschleistung auf die Teilaustauschleistungen beim Nachregeln mit entsprechend angepasst wird.

Ist also beispielsweise die Austauschleistung um 10% zu erhöhen, so können zunächst alle Teilaustauschleistungen um 10% erhöht werden. Bei Berücksichtigung sich ergebender unterschiedlicher Teilabweichungen kann diese Gleichverteilung dann ggf. angepasst werden, indem beispielsweise eine Teilaustauschleistung stärker und eine andere weniger stark erhöht wird, wenn dies den unterschiedlichen Teilabweichungen entspricht. Es kann dann, um bei dem Beispiel zu bleiben, eine Teilaustauschleistung um 9% und eine andere um 11% erhöht werden.

Außerdem wird alternativ vorgeschlagen, dass das Bestimmen zukünftiger Teilleistungsverläufe in Abhängigkeit von diesen Teilabweichungen durchgeführt wird. Insbesondere wird vorgeschlagen, dass eine Verteilvorschrift zum Bestimmen der Leistungsverläufe in Abhängigkeit von diesen Teilabweichungen angepasst wird. Das Bestimmen der Teilleistungsverläufe erfolgt grundsätzlich in Abhängigkeit von dem Austauschleistungsverlauf. Er wird nämlich auf die Teilleistungsverläufe verteilt bzw. aufgeteilt, nämlich insbesondere nach einem vorgebbaren Schlüssel, im einfachsten Fall erfolgt eine Gleichverteilung. Im Laufe der Durchführung des Verfahrens kann sich herausstellen, dass beispielsweise die Speicher der Leistungseinheiten unterschiedlich stark gealtert sind oder aus anderen Gründen unterschiedliche und/oder über die Zeit veränderte Charakteristika aufweisen. Das kann aus diesen Teilabweichungen abgeleitet werden, denn dort, wo größere Teilabweichungen auftreten, insbesondere im relativen Sinne, hat eine entsprechend stärkere Veränderung der Speicherleistungseinheit stattgefunden.

Insbesondere kann diese Berücksichtigung so erfolgen, dass die Verteilungsvorschrift, mit der der Austauschleistungsverlauf auf die einzelnen Teilleistungsverläufe aufgeteilt werden, angepasst wird. Insoweit wird dieses Verfahren adaptiv durchgeführt, sodass für die nächste Bestimmung der Teilleistungsverläufe eine Verbesserung erreicht werden kann. Hier ist auch zu berücksichtigen, dass das Verfahren einen ständig wiederkehrenden Prozess beschreibt. Das Verfahren beschreibt also einen Zyklus, der gut an dem Beispiel erklärt werden kann, wenn die Elektrofahrzeuge tagsüber eine Fahraufgabe verrichten, nachts geladen werden. Dann liegt nämlich ein wiederkehrender Prozess vor, indem jeweils für die Nacht, in der die Elektrofahrzeuge geladen werden, einen Austauschleistungsverlauf vorgegeben wird, der in der Nach denn abgefahren wird und zu dem am Ende der Nacht beurteilt werden kann, ob die Vorgaben gut waren oder angepasst werden können.

Gemäß einer Ausführungsform wird vorgeschlagen, dass eine Berechnung des Gesamtladezustands oder eine Berechnung des Ladeenergiebedarfs der Ladestruktur wenigstens dann wiederholt wird, wenn wenigstens eines der Elektrofahrzeuge an die Ladeinfrastruktur angeschlossen wird oder davon getrennt wird. Dem liegt die Erkenntnis zugrunde, dass besonders ein spätes Heimkehren eines Elektrofahrzeugs dazu führt, dass der Gesamtladezustand oder der Ladeenergiebedarf sich signifikant ändern kann und daher wird vorgeschlagen, eine solche späte Rückkehr eines Elektrofahrzeugs zu berücksichtigen und dann die entsprechenden Berechnungen zu wiederholen und dadurch anzupassen. Grundsätzlich kommt hier auch in Betracht, dass ein Elektrofahrzeug frühzeitig von der Ladeinfrastruktur getrennt wird, zum Beispiel, weil eine plötzliche Sonderaufgabe zu verrichten ist.

Gemäß einer Ausführungsform wird vorgeschlagen, dass beim Bereitstellen der Austauschleistung die Austauschleistung erfasst und mit einer Summe der bereitgestellten Teilaustauschleistungen verglichen wird, um eine Abweichung zu ermitteln. In Abhängigkeit von der so ermittelten Abweichung wird das Bereitstellen der Teilaustauschleistung nachgeregelt um die Abweichung zu verringern. Dieser Vorschlag des Nachregelns betrifft besonders die Erkenntnis, dass beim Bereitstellen der Austauschleistung Verluste auftreten, wodurch sich Abweichungen ergeben können. Zum Ausgleichen kann somit eine Regelung vorgesehen sein, die die Austauschteilleistungen nachregelt. Abweichungen der Gesamtleistung werden somit zum Nachregeln der Teilleistungen verwendet. Somit ist ein Regler vorgesehen, der eine Gesamtabweichung zum Nachregeln auf die einzelnen Teilleistungen umlegt.

Insbesondere wird vorgeschlagen, dass die ermittelte Abweichung als über einen Prüfzeitraum ermittelte Abweichungsenergie berücksichtigt wird. Der Prüfzeitraum ist insbesondere als Zeitraum von Beginn des Steuerzeitraums bis zum aktuellen Zeitpunkt vorzusehen. Damit kann die Abweichungsenergie bis zum aktuellen Zeitpunkt bestimmt werden. Das Bereitstellen der Teilaustauschleistungen in Abhängigkeit von der ermittelten Abweichung, wird somit in Abhängigkeit von der ermittelten Abweichungsenergie nachgeregelt. Dadurch kann die Nachregelung verbessert werden, sowohl von der Genauigkeit her, als auch hinsichtlich Störungen, denn die Abweichungsenergie ist das Integral der Differenz der vorgesehenen und tatsächlichen Leistungen. Es lässt sich damit ein Verhalten eines Reglers mit I-Anteil erreichen.

Gemäß einem Aspekt wird vorgeschlagen, ein vorgegebener zeitlicher Verlauf des Gesamtladezustands als Ladezustandsverlauf aus dem Austauschleistungsverlauf bestimmt wird, und dass eine Abweichung eines erfassten Gesamtladezustands von dem vorgegebenen Gesamtladezustand als erfasste Abweichungsenergie berücksichtigt wird. In Abhängigkeit von der erfassten Abweichungsenergie werden dann die Teilleistungsverläufe nachgeregelt. Vorzugsweise erfolgt das Nachregeln erst, wenn die erfasste Abweichungsenergie dem Betrage nach eine vorgebbare Mindestabweichung erreicht.

Somit liegt auch hier die Erkenntnis zugrunde, dass eine dauerhafte Abweichung des erfassten Verlaufs von dem vorgegebenen bzw. erwarteten Verlauf am besten durch eine Abweichungsenergie erkannt werden kann. Kleine kurzfristige Abweichungen, die auch auf Messungenauigkeit zurückgeführt werden könnten oder auf zeitliche Abweichungen, brauchen möglicherweise nicht nachgeregelt werden. Erst wenn sich auch eine Abweichung der Energie ergibt, wenn also insgesamt die Speicher der Elektrofahrzeuge nicht wie gewünscht aufgeladen werden, besteht ein Nachreglungsbedarf. Um unnötiges Nachregeln auszuschließen, können zudem die genannte vorgebbare Mindestabweichung vorgesehen sein. Dadurch wird eine Relevanzschwelle eingeführt.

Hier liegt auch der Gedanke zugrunde, dass leichte Abweichungen des Gesamtladezustands am Ende des Steuerzeitraums hinnehmbar sind. Solche Abweichungen können dann besser über eine Adaption berücksichtigt werden, die erst in einem späteren Zyklus wirksam wird, wenn also erneut ein Austauschleistungsverlauf vorgegeben wird. Das hat auch den Vorteil, dass keine Ad-hoc Leistungsänderungen unnötig auftreten, die nämlich dem elektrischen Versorgungsnetz gegenüber nicht angekündigt werden können und sich daher ungünstig auf die Netzstützung und/oder auf Beschaffungskosten auswirken können.

Gemäß einem Aspekt wird vorgeschlagen, dass für eine erste und wenigstens eine zweite Leistungseinheit, auch hier geht es insbesondere um Elektrofahrzeuge, jeweils ein Teilladezustandsverlauf vorgegeben wird. Der kann insbesondere aus dem jeweiligen Teilleistungsverlauf berechnet werden. Dazu wird vorgeschlagen, eine Teilabweichung zwischen einem erfassten Teilladezustand und einem durch den Teilladezustandsverlauf vorgegeben Teilladezustand zu erfassen. Diese Abweichung wird somit als Teilabweichung bezeichnet. Für jede Leistungseinheit kann eine solche Teilabweichung bestimmt werden.

Dazu wird nun weiter vorgeschlagen, dass für die erste Leistungseinheit in Abhängigkeit von ihrer Teilabweichung ihre Teilaustauschleistung und/oder ihr vorgegebener Teilleistungsverlauf verändert werden. Dies erfolgt so, dass die Teilabweichung den Betragen nach verringert wird. Es wird also versucht, diese Teilabweichung auszuregeln. Die Veränderung der Teilaustauschleistung führt zu einer Veränderung des Austauschleistungsverlaufs oder des Gesamtladezustands. Die Veränderung dieser Teilaustauschleistung der einen Leistungseinheit wirkt sich also zwangsläufig auf die Gesamtleistung bzw. auf die Gesamtladung auf, also auf alle Elektrofahrzeuge also auf die gesamte Ladeinfrastruktur.

Dazu wird dann vorgeschlagen, dass für die wenigstens eine weitere Leistungseinheit ihre Teilaustauschleistung und/oder ihr vorgegebener Teilleistungsverlauf unter Berücksichtigung ihrer Teilabweichung verändert wird. Das soll so geschehen, dass der Veränderung des Austauschleistungsverlaufs bzw. des Gesamtladezustands durch die erste Leistungseinheit entgegengewirkt wird. Wird also die Teilaustauschleistung der ersten Leistungseinheit erhöht, erhöht sich auch der Gesamtaustauschleistungsverlauf. Das ist aber grundsätzlich unerwünscht, denn das wirkt sich auf das elektrische Versorgungsnetz aus, dass sich aber möglichst auf den vorgegebenen Austauschleistungsverlauf verlassen können soll.

Entsprechend wird vorgeschlagen, dass eine weitere Leistungseinheit, oder mehrere weitere Leistungseinheiten in der Ladeinfrastruktur gegensteuern. Diese wenigstens eine weitere Leistungseinheit kann also, um bei dem Beispiel zu bleiben, seine Teilaustauschleistung verringern. Verringert sie ihre Teilaustauschleistung um denselben Betrag um den die Teilaustauschleistung der ersten Leistungseinheit erhöht wurde, gelingt ein vollständiger Ausgleich. Die weitere Leistungseinheit selbst ist aber meist ebenfalls bestrebt, aufgeladen zu werden. Daher kann ein solches Ausgleichen oder Gegensteuern durch eine solche wenigstens eine weitere Leistungseinheit nur in gewissen Grenzen vorgenommen werden.

Vorzugsweise wird somit vorgeschlagen, dass die Veränderungen der ersten und wenigstens einer weiteren Leistungseinheit so durchgeführt werden, dass ihre Teilabweichungen jeweils dem Betrag nach eine vorgebbare Maximalabweichung nicht überschreiten. Dadurch wird verhindert, dass besonders die weitere Leistungseinheit nicht zu stark gegensteuert und dadurch dann selbst nicht mehr ausreichend geladen werden kann.

Insbesondere ist vorgesehen, dass dann, wenn wenigstens eine Teilabweichung dem Betrage nach die vorgebbare Maximalabweichung überschreitet, der vorgegebene Austauschleistungsverlauf und/oder der vorgegebene Ladezustandsverlauf verändert werden. Wenn also die Abweichungen zu groß sind, wird als zweite Maßnahme doch der vorgegebene Leistungsaustauschverlauf angepasst. Das hat dann auch Auswirkungen auf den vorgegebenen Ladezustandsverlauf, der in Abhängigkeit von diesem Austauschleistungsverlauf berechnet wurde. Dabei ist zu berücksichtigen, dass der vorgegebene Ladezustandsverlauf insbesondere eine Referenzgröße oder Sollgröße bildet.

Hier wurde besonders erkannt, dass es vorteilhaft ist, dadurch den Verlauf eines jeden Ladezustandes, also auch der Einzelladezustände, zu überwachen und dadurch möglichst gut zu einem Zielladezustand, der auch als Ziel-SoC abgekürzt werden kann, zu führen. Dadurch kann rechtzeitig auf Abweichungen reagiert werden, die sich durch Abweichungen zu dem jeweiligen Ladezustandsverlauf, also auch Einzelladezustandsverlauf, bemerkbar machen. Dadurch kann auch der Ladeprozess und damit das Steuern der Austauschleistung insgesamt gut geführt werden.

Gemäß einem Aspekt wird vorgeschlagen, dass wenigstens ein steuerbarer Verbraucher und/oder ein steuerbarer Erzeuger der Ladeinfrastruktur so gesteuert wird, dass ein Verändern der Teilleistungsverläufe so ausgeglichen wird, dass die Austauschleistung den vorgegebenen Austauschleistungsverlauf einhält. Hier liegt besonders die Erkenntnis zugrunde, dass steuerbare Verbraucher oder Erzeuger in der Ladeinfrastruktur vorgesehen sein können. Besonders kann die Ladeinfrastruktur Teil eines Betriebshofs sein, der naturgemäß auch Verbraucher aufweist. Beispielsweise kann ein Kühlhaus ein steuerbarer Verbraucher sein. Meist hat ein Kühlhaus eine so hohe thermische Kapazität, dass das Betreiben von Kühlaggregaten auch um 1 - 2 Stunden verzögert oder vorgezogen werden kann. Weitere Beispiele können Heizvorrichtungen sein. Dabei ist zu beachten, dass das Beziehen elektrischer Leistung aus dem elektrischen Versorgungsnetz ein gewünschter Vorgang sein kann, der nicht reduziert werden sollte. Aber auch das hängt von der Situation ab.

Ein steuerbarer Erzeuger kann beispielsweise eine Solaranlage auf dem Dach des Betriebshofs sein, um bei dem Beispiel zu bleiben. Zwar wird eine Photovoltaikanlage möglichst nicht gesteuert, sondern sollte so viel Leistung erzeugen, wie sich aus der aktuellen Sonneneinstrahlung ergibt, die zu dem nachts meist 0 ist, aber mit der Solaranlage kann ein elektrischer Speicher gekoppelt sein, der die Solarleistung somit gesteuert abgeben kann. Auch das ist nur ein Beispiel eines gesteuerten Erzeugers. Je nach Größe und Ort des Betriebshofes um auch weiterhin bei diesem Beispiel zu bleiben, kann dieser auch über eine Windenergieanlage verfügen. Im ländlichen Bereich kommt zudem auch eine Biogasanlage in Betracht.

Durch das Verwenden dieser gesteuerten Verbraucher oder Erzeuger kann somit eine Abweichung von dem vorgegebenen Austauschleistungsverlauf ausgeglichen werden, sodass der tatsächliche Austauschleistungsverlaufgleichbleiben kann und Abweichungen in der Ladeinfrastruktur durch diese Verbraucher oder Erzeuger ausgeglichen werden können. Wenn also mehr Leistung zum Laden der Elektrofahrzeuge benötigt wird, als vorher kalkuliert wurde, als also durch den Austauschleistungsverlauf vorgegeben wurde, kann diese zusätzlich benötigte Leistung von dem steuerbaren Erzeuger bereitgestellt werden. Sie kann auch von dem steuerbaren Verbraucher indirekt bereitgestellt werden, wenn dieser nämlich bei dem Vorgeben des Austauchleistungsverlaufs mitberücksichtigt wurde. Der steuerbare Verbraucher kann dann zusätzliche Leistung dadurch liefern, dass er selbst weniger Leistung verbraucht.

Gemäß einem Aspekt wird vorgeschlagen, dass in Abhängigkeit von dem vorgegebenen Austauschleistungsverlauf ein Zielladezustand als am Ende des Steuerzeitraums erwarteter Gesamtladezustand ermittelt wird. Dazu wird vorgeschlagen, dass bei oder nach Erreichen des Endes des Steuerzeitraums ein Endladezustand als tatsächlicher Gesamtladezustand am Ende des Steuerzeitraums erfasst wird. Weiter wird vorgeschlagen, dass in Abhängigkeit von einem Ergebnisvergleich als Vergleich des Endladezustands mit dem Zielladezustand der Ladeenergiebedarf für einen weiteren Steuerzeitraum ermittelt wird. Es wird also vorgeschlagen, Abweichungen zwischen angenommenem Ladezustand und erreichtem Ladezustand zu erfassen und für einen nächsten Zyklus zu berücksichtigen und somit eine Adaption durchzuführen.

Hier liegt besonders die Erkenntnis zugrunde, dass geringe Abweichungen im Bereich von 10% des Gesamtladezustands am Ende des Steuerzeitraums hinnehmbar sind. Somit kann in dieser Größenordnung auf ein Nachregeln der Austauschleistung vom vorgegebenen Austauschleistungsverlauf verzichtet werden. Die Abweichungen können dann bei der nächsten Berechnung, also meistens für den nächsten Tag Berücksichtigung in einer Verbesserung finden. Es wird dann erneut ein Austauschleistungsverlauf vorgegeben, der dann möglicherweise besser erreicht wird.

Insbesondere ist vorgesehen, dass der Ladeenergiebedarf mittels einer Berechnungsvorschrift ermittelt wird, und dass in Abhängigkeit von dem Ergebnisvergleich die Berechnungsvorschrift oder der mittels der Berechnungsvorschrift ermittelte Ladeenergiebedarf verändert werden. Die Berechnungsvorschrift kann beispielsweise so aussehen, dass sie eine Differenz bildet, zwischen dem erwarteten Gesamtladezustand zu Beginn des Steuerzeitraums und einem gewünschten Gesamtladezustand am Ende des Steuerzeitraums. Diese Differenz Anfangs- und Endladezustand kann dann bereits der Ladeenergiebedarf sein.

Diese Differenzbildung wäre dann die Berechnungsvorschrift, die aber auch als eine Unsicherheit die Berechnung eines Erwartungswertes für den Gesamtladezustand zu Beginn des Steuerzeitraums beinhaltet. Im Übrigen ist der gewünschte Gesamtladezustand am Ende des Steuerzeitraums gleichsetzbar mit dem am Ende des Steuerzeitraums erwarteten Gesamtladezustands. Dieser darf nämlich erwartet werden, weil der Austauschleistungsverlauf so vorgegeben wird, dass der gewünschte Gesamtladezustand möglichst herauskommen soll. Die Berechnungsvorschrift kann aber beispielsweise auch zusätzlich zu der genannten Differenzbildung die Berücksichtigung einer zu erwartenden Verlustleistung beinhalten.

Diese Berechnungsvorschrift kann dann in Abhängigkeit von dem Ergebnisvergleich angepasst werden. Besonders die dabei berücksichtigte Verlustleistung kann bei dieser Anpassung verändert werden. Beispielsweise kann bei dem Ergebnisvergleich herauskommen, dass ein geringerer Gesamtladezustand erreicht wurde als erwartet wurde. Entsprechend wurde möglicherweise ein zu geringer Wert für die Verlustleistung angesetzt. Somit kann im nächsten Schritt diese Verlustleistung entsprechend erhöht werden um ein Beispiel zu nennen.

Es kommt aber auch in Betracht, dass die Berechnungsvorschrift als solche nicht verändert wird, damit der Ladeenergiebedarf berechnet wird und dieser dann abhängig von dem Ergebnisvergleich verändert wird. Im einfachsten Fall wird dieser Ergebnisvergleich aufaddiert.

Gemäß einem Aspekt wird vorgeschlagen, dass eine Abweichung zwischen tatsächlich ausgetauschter Austauschleistung und durch den Austauschleistungsverlauf vorgegebener Austauschleistung als Austauschleistungsabweichung erfasst wird. Damit kann erfasst werden, wie gut der Austauschleistungsverlauf vorgegeben wurde.

Auch hier kann weiter davon ausgegangen werden, dass der Ladeenergiebedarf mittels der genannten Berechnungsvorschrift ermittelt wird. Dazu ist weiter vorgesehen, dass in Abhängigkeit von der Austauschleistungsabweichung der Ladeenergiebedarf für einen weiteren Steuerzeitraum ermittelt wird. Hier erfolgt also eine Adaption basierend auf einem Unterschied zwischen vorgegebenem Austauschleistungsverlauf und dem Austauschleistungsverlauf, der sich dann tatsächlich eingestellt hat. Insbesondere kann die Austauschleistungsabweichung hierfür über den Steuerzeitraum auf integriert werden, bzw. die Differenz zwischen tatsächlich aufgetretener Austauschleistung und dem vorgegebenen Austauschleistungsverlauf kann auf integriert werden und das Ergebnis kann als Austauschleistungsabweichung bezeichnet und verwendet werden.

Insbesondere ist vorgesehen, dass in Abhängigkeit von der Austauschleistungsabweichung die Berechnungsvorschrift oder der mittels der Berechnungsvorschrift ermittelte Ladeenergiebedarf verändert werden. Auch hier kann eine Adaption wie vorstehend basierend auf dem Ergebnisvergleich beschrieben wurde, durchgeführt werden, hier aber basierend auf der Austauschleistungsabweichung. Die Berechnungsvorschrift kann damit angepasst werden. Die Anpassung der Berechnungsvorschrift kann beispielsweise auch durch einen Faktor erzeugt werden, beispielsweise kann der Faktor 1,1 verwendet werden, wenn eine Anpassung um 10% Erhöhung vorgesehen ist.

Es kommt aber auch in Betracht, für sämtliche Aspekte, die zur Adaption der Berechnungsvorschrift beschrieben wurden, dass die Berechnungsvorschrift in einem iterativen Verfahren oder in einer Regelungsschleife angepasst wird, sodass sie sich idealerweise asymptotisch einem Grenzwert hinsichtlich der Anpassung nähern kann. Beispielsweise kann dafür ein Anpassungsfaktor vorgesehen sein, der anfänglich den Wert 1 aufweist. Wird nun, sei es über die Austauschleistungsabweichung oder den Ergebnisvergleich, eine gewünschte Anpassung um 10 % erkannt, so wird dieser Anpassungsfaktor nicht um diese 10% erhöht, sondern nur um einen Bruchteil dieser beispielhaften Abweichung von 10%, zum Beispiel um ein Zehntel. Der Anpassungswert würde dann um 1% erhöht werden, nämlich von 1 auf 1,01.

Sollte, als theoretische Annahme zur besseren Erläuterung der nächste Verlauf identisch sein, so müsste sich eine Abweichung von 9% ergeben, denn der Anpassungsfaktor hat bereits zu einer Erhöhung um 1% geführt. Diese Abweichung von 9% würde dann ebenfalls mit einem Zehntel berücksichtigt, sodass der Anpassungsfaktor von 1,01 auf 1,019 erhöht wird. So könnte er sich theoretisch über viele Wiederholungen asymptotisch dem Wert von 1,1 nähern sollten alle Verläufe gleich verlaufen. Andernfalls nähert er sich entsprechend einem anderem Wert der einer mittleren Abweichung entspricht.

Dieses Verhalten kann auch als Verzögerungsverhalten erster Ordnung bezeichnet werden. Es wird ganz generell vorgeschlagen, dass die Adaption der Berechnungsvorschrift so erfolgt, dass sie einen Anpassungsfaktor aufweist, der über ein Verhalten eines Verzögerungsgliedes erster Ordnung sukzessive nachgeführt werden kann.

Gemäß einem Aspekt wird vorgeschlagen, dass wenigstens eine der Leistungseinheiten als steuerbarer elektrischer Verbraucher ohne elektrischen Speicher ausgebildet ist und damit kann diese wenigstens eine Leistungseinheit auch eine Funktionalität ausführen, die oben bereits zu einem steuerbaren Verbraucher beschrieben wurde.

Erfindungsgemäß wird zudem eine Ladeinfrastruktur vorgeschlagen. Eine solche Ladeinfrastruktur ist zum Austausch einer Austauschleistung mit einem elektrischen Versorgungsnetz vorgesehen, wobei
- mehrere Leistungseinheiten zum Abgeben oder Aufnehmen elektrischer Leistung an die Ladeinfrastruktur anschließbar sind, um elektrische Leistung zwischen den Leistungseinheiten und dem elektrischen Versorgungsnetz über die Ladeinfrastruktur auszutauschen, und
- mehrere der Leistungseinheiten jeweils als Elektrofahrzeug ausgebildet sind, sodass mehrere Elektrofahrzeuge jeweils an die Ladeinfrastruktur anschließbar sind, um elektrische Leistung zwischen den Elektrofahrzeugen und dem elektrischen Versorgungsnetz über die Ladeinfrastruktur auszutauschen und die Elektrofahrzeuge dadurch zu laden oder zu entladen,
und die Ladeinfrastruktur weist eine zentrale Steuereinheit auf, die vorbereitet ist, zum
- Bestimmen einer Energievorgabe für einen Steuerzeitraum, die wenigstens die Energiemenge vorgibt, die die Ladeinfrastruktur in dem Steuerzeitraum aus dem elektrischen Versorgungsnetz beziehen soll,
- Vorgeben einer Leistungsbegrenzung, die wenigstens eine Grenze für die Austauschleistung angibt, die von der Ladeinfrastruktur bereitgestellt werden kann,
- Vorgeben eines Austauschleistungsverlaufs (P(t)) in Abhängigkeit von
   - der Energievorgabe (E(t)) und
   - der Leistungsbegrenzung, wobei
      - der Austauschleistungsverlauf für die Ladeinfrastruktur einen zeitlichen Verlauf der Austauschleistung für den Steuerzeitraum vorgibt,
- Bestimmen von Teilleistungsverläufen in Abhängigkeit von dem Austauschleistungsverlauf, die jeweils für eine der Leistungseinheiten einen zeitlichen Verlauf einer Teilaustauschleistung in dem Steuerzeitraum vorgeben, wobei die Summe aller Teilleistungsverläufe den Austauschleistungsverlauf im Wesentlichen entspricht, und
- Bereitstellen der Teilaustauschleistungen durch die Leistungseinheiten in Abhängigkeit von den vorgegebenen Teilleistungsverläufen, um dadurch die Austauschleistung zwischen der Ladeinfrastruktur und dem elektrischen Versorgungsnetz bereitzustellen.

Insbesondere ist vorgesehen, dass die Ladeinfrastruktur, insbesondere ihre zentrale Steuereinheit, dazu vorbereitet ist, ein Verfahren gemäß einem der vorstehend beschriebenen Ausführungsformen auszuführen. Damit kann die Ladeinfrastruktur die im Zusammenhang mit diesen Ausführungsformen bzw. Aspekten beschriebenen Vorteilen erreichen.

Erfindungsgemäß wird zudem eine Ladestation vorgeschlagen, die eine solche Ladeinfrastruktur aufweist.

Die Erfindung wird nachfolgend unter Bezugnahme auf die begleitenden Figuren beispielhaft näher erläutert.
- Figur 1: zeigt ein Ablaufschema zum Veranschaulichen des vorgeschlagenen Verfahrens.
- Figur 2: zeigt einen Ausschnitt des Ablaufschemas der Figur 1 zur Veranschaulichung eines Ladezustandsbereichs und seiner Anwendung.
- Figur 3: zeigt einen Fuhrpark mit Ladeinfrastruktur schematisch.
- Figur 4: zeigt eine Regelungsstruktur einer Ladeinfrastruktur als schematische Übersicht.
- Figur 5: zeigt schematisch eine Regelungsstruktur eines Vorgabeblocks der Regelungsstruktur der Figur 4.
- Figuren 6 und 7: zeigen jeweils einen Teil einer Regelungsstruktur eines Verteilungsblocks der Regelungsstruktur der Figur 4.

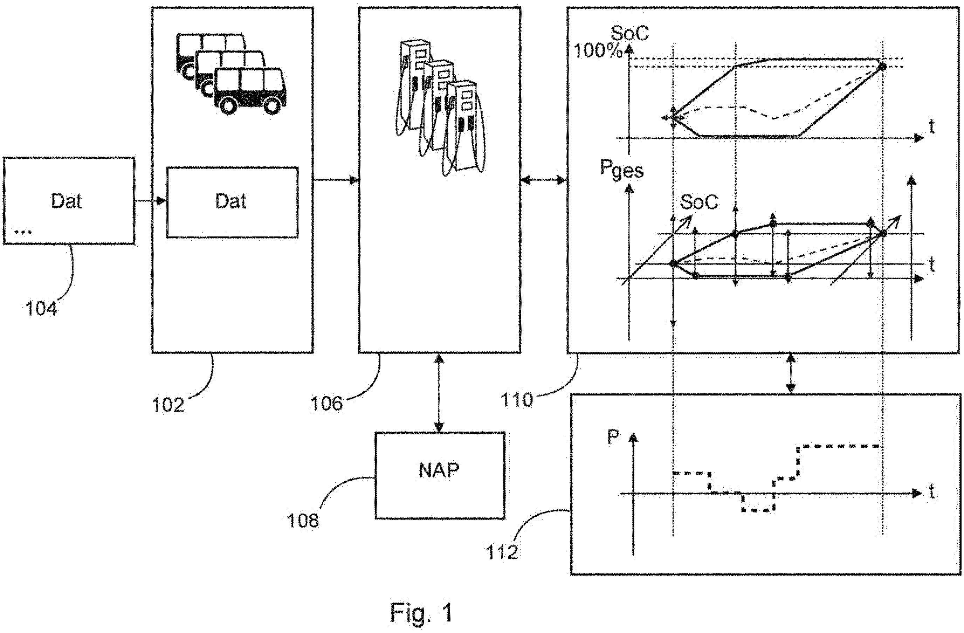

Das Ablaufschema der Figur 1 soll den grundsätzlichen Ablauf des vorgeschlagenen Verfahrens erläutern. Ein Gedanke bei dem Verfahren ist es, Speicherkapazitäten eines Fuhrparks mit Elektrofahrzeugen auszunutzen, um damit bedarfsabhängig Leistung vorübergehend einem elektrischen Versorgungsnetz zur Verfügung zu stellen und auch das Entnehmen elektrischer Leistung aus dem Versorgungsnetz zum Laden der Speicher der Elektrofahrzeuge des Fuhrparks unter Berücksichtigung des elektrischen Versorgungsnetzes gezielt zu steuern. Jedes Elektrofahrzeug bildet eine Leistungseinheit. Mit dem Verfahren kann auch eine Strompreisoptimierung erreicht werden. Der Fuhrpark kann also so gesteuert werden, dass er den benötigten Ladestrom möglichst günstig bezieht und dabei die technischen Randbedingungen einhält. Besonders wurde erkannt, dass es dafür auf eine gute Planung der technischen Ressourcen ankommt, und die kann durch das vorgeschlagene Verfahren erreicht werden.

Der Fuhrpark der Elektrofahrzeuge wird durch den Fuhrparkblock 102 repräsentiert. Der Fuhrparkblock beinhaltet dabei Informationen zu den Elektrofahrzeugen. Diese Informationen beinhalten Informationen über die Speicher des jeweiligen Elektrofahrzeugs, nämlich detaillierte Information, also für jeden Speicher jedes Elektrofahrzeugs einzeln. Ebenso sind Informationen zu Ladezuständen der elektrischen Speicher enthalten, die der jeweilige Speicher aufweisen sollte, bevor das Elektrofahrzeug, besonders morgens, startet. Hier liegt auch besonders der Gedanke zugrunde, dass der Fuhrpark der Elektrofahrzeuge für vergleichsweise gut geplante Aufgaben eingesetzt wird, wie beispielsweise als Elektrobus eines Verkehrsbetriebs zum Durchführen eines öffentlichen Personennahverkehrs, um nur ein Beispiel zu nennen.

Entsprechend können in dem Fuhrparkblock 102 Informationen zu Abfahrtszeiten der jeweiligen Elektrofahrzeuge bekannt sein. Die Abfahrtszeiten bestimmen besonders, wann der Ladezustand des jeweiligen Speichers erreicht sein muss. Die Abfahrtszeit bestimmt aber auch, ab wann der Speicher des entsprechenden Elektrofahrzeugs nicht mehr ans elektrische Versorgungsnetz angeschlossen ist.

Der Fuhrparkblock kann aber auch Informationen darüber enthalten, welche maximale Ladeleistung oder maximale Entladeleistung jeder der Speicher jeweils hat. Diese genannten Informationen können in dem Fuhrparkblock 102 gespeichert sein, wobei sie auch aktualisiert werden können.

Darüber hinaus ist ein Eingangsdatenblock 104 veranschaulichend dargestellt. Dieser Eingangsdatenblock 104 beinhaltet besonders Informationen bzw. Daten, die stark veränderlich sind, insbesondere solche, die sich täglich ändern können und/oder täglich aktualisiert werden können. Dazu gehört ein Fahrplan für die Elektrofahrzeuge, wenn ein solcher vorhanden ist, der als Busfahrplan vorhanden sein kann, wenn die Elektrofahrzeuge des Fuhrparks Elektrobusse sind. Aber auch Wetterdaten, insbesondere eine Wettervorhersage, können durch diesen Eingangsdatenblock 104 bereitgestellt werden. Solche Daten werden in den Fuhrparkblock 102 eingegeben und können mit den in dem Fuhrparkblock 102 vorhandenen Daten zusammengeführt bzw. zusammen verrechnet werden. Dabei kann sich aus solchen Eingangsdaten wie dem Busfahrplan eine Zeit berechnen lassen oder zumindest abschätzen lassen, wann das jeweilige Elektrofahrzeug in dem Fuhrpark ankommt und dann zum Aufnehmen elektrischer Leistung aus dem elektrischen Versorgungsnetz, oder zum Abgeben elektrischer Leistung an das elektrische Versorgungsnetz bereitsteht.

Auch ein Ladezustand jedes Elektrospeichers zu dem Zeitpunkt, wenn das entsprechende Elektrofahrzeug am Fuhrpark ankommt, kann berechnet werden. Dazu können die Daten des Eingangsdatenblocks 104 verwendet werden und zusätzlich aus vorhanden Daten des Fuhrparkblocks 102 weitere Daten errechnet werden, wie insbesondere der Ladezustand oder zu erwartende Ladezustand des Elektrofahrzeugs, wenn es in dem Fuhrpark ankommt. Für diese Berechnung kann insbesondere eine Kenntnis über den Speicher, besonders wie groß er ist, verwendet werden. Diese Information wird dann aus dem Fuhrparkblock 102 genommen.

Auf diese Art und Weise wird vorgeschlagen, dass eine Prognose oder Vorhersage erstellt wird. Auch das kann in dem Fuhrparkblock 102 erfolgen. Es sei an dieser Stelle angemerkt, dass das Verfahren grundsätzlich auch anders umgesetzt werden kann, als dass unbedingt die erläuterten Blöcke verwendet werden, wie der Fuhrparkblock 102 und der Eingangsdatenblock 104. Diese Blöcke können beispielsweise auch anderweitig verknüpft sein, oder es können mehrere Eingangsschnittstellen vorhanden sein, um entsprechende Eingangsdaten zu empfangen. Beispielsweise kann es zweckmäßig sein, eine Wettervorhersage aus einer anderen Quelle zu erhalten als den Busfahrplan bzw. einen anderen Fahrplan. Insoweit dient das Ablaufschema der Figur 1 zur grundsätzlichen Erläuterung.

Die Prognose oder Vorhersage kann dann an eine Ladeinfrastruktur des Fuhrparks gegeben werden. Diese Ladeinfrastruktur wird durch den Infrastrukturblock 106 repräsentiert. Der Infrastrukturblock 106 kann dabei Informationen zur Ladeinfrastruktur enthalten, nämlich insbesondere eine maximale Ladeleistung, die durch entsprechende Ladeterminals vorgegeben sein kann. Diese Ladeterminals sind ebenfalls Teil der Ladeinfrastruktur. Auch eine Verfügbarkeit der Elektrospeicher kann in dem Infrastrukturblock 106 bekannt sein, besonders dadurch, dass die Ladeterminals jeweils die Information bereitstellen, ob an ihnen ein Elektrofahrzeug angeschlossen ist, gegebenenfalls auch was für eines bzw. was für ein Speicher.

Teilweise ergeben sich diese Daten auch aus den elektrischen Speichern und damit können die Daten gegebenenfalls von dem Fuhrparkblock 102 erhalten werden.

Der Infrastrukturblock 106 erhält außerdem die Vorhersagedaten, nämlich die jeweiligen Ankunftszeiten der Elektrofahrzeuge an den Ladeterminals und ebenfalls die einzelnen Ladezustände der Elektrofahrzeuge, sobald sie an den Ladestationen ankommen und angeschlossen werden. Diese Daten werden als Vorhersage übermittelt und weiterverarbeitet.

Außerdem ist ein Netzanschlussblock 108 vorgesehen, der besonders Informationen über das elektrische Versorgungsnetz und über verwendete Netzanschlusspunkte zur Verfügung stellen kann. Die Netzanschlusspunkte sind diejenigen, über die die Ladeterminals letztlich mit dem elektrischen Versorgungsnetz verbunden sind. Dabei kann die Ladeinfrastruktur über einen oder mehrere Netzanschlusspunkte mit dem elektrischen Versorgungsnetz verbunden sein.

Der Netzanschlussblock 108 kann Daten über eine maximale Einspeiseleistung, eine Sollspannung und eine Sollblindleistung bereitstellen. Die maximale Leistung, die auch als maximale Austauschleistung bezeichnet werden kann, ist diejenige Leistung, die maximal in das Netz eingespeist werden kann, oder die maximal aus dem elektrischen Versorgungsnetz entnommen werden kann. Die Sollspannung ist besonders eine Spannung des elektrischen Versorgungsnetzes an dem jeweiligen Netzanschlusspunkt. Eine Sollblindleistung kann eine Blindleistung sein, die von einem Netzbetreiber vorgegeben wird und/oder eine, die sich aus Daten des elektrischen Versorgungsnetzes ergibt. Darunter kann eine Höhe der einzuspeisenden Blindleistung fallen, die in Abhängigkeit von der aktuellen Netzspannung bestimmt werden kann.

All diese Daten können bereitgestellt werden, nämlich gemäß dem Ablaufschema der Figur 1 an den Infrastrukturblock 106. Aber auch hier muss nicht unbedingt eine solche Blockaufteilung erfolgen.

Der Netzanschlussblock 108 veranschaulicht zudem, dass sowohl die von den Elektrofahrzeugen bzw. ihren Speichern bereitstellbare Leistung, nämlich Wirkleistung, als auch eine bereitstellbare Blindleistung an den einen bzw. die mehreren Netzanschlusspunkt abgegeben wird, um darüber in das elektrische Versorgungsnetz eingespeist zu werden bzw. aus dem elektrischen Versorgungsnetz entnommen zu werden.

Aus diesen Daten kann, besonders in dem Infrastrukturblock 106, eine maximale Austauschleistung zum maximalen Austausch mit dem elektrischen Versorgungsnetz bestimmt bzw. aufgenommen werden. Es kann auch eine maximal verfügbare Wirkleistung bestimmt werden. Diese kann besonders von den Ladezuständen der Elektrofahrzeuge abhängen. Gleiches gilt für die verfügbare Blindleistung, die zwar wenig Speicherkapazität der Elektrospeicher benötigt, aber dennoch zumindest ein wenig Speicherkapazität benötigt und zudem auch freie Kapazitäten zum Einspeisen entsprechenden Stromes in das elektrische Versorgungsnetz benötigt.

Zur Koordinierung der einzelnen Speicher der Elektrofahrzeuge des Fuhrparks, um dann aber eine gemeinsame Austauschleistung des Fuhrparks dem elektrischen Versorgungsnetz anbieten zu können, ist besonders eine Ladesteuereinheit vorgesehen, die auch als Aggregator bezeichnet werden kann bzw. einen Aggregator enthalten kann.

Mit den vorstehend erläuterten Informationen erstellt diese Ladesteuereinheit bzw. derAggregator einen Ladezustandsbereich. Das wird in dem Aggregationsblock 110 veranschaulicht. Der Aggregator kann Teil einer zentralen Steuereinheit sein, oder die zentrale Steuereinheit bilden.

Durch den Aggregator, repräsentiert durch den Aggregationsblock 110, werden all diese Informationen, die vorstehend zu Figur 1 erläutert wurden, verwendet, um einen Ladezustandsbereich zu bestimmen. Besonders wird vorgeschlagen, eine Vorhersage für einen solchen Ladezustandsbereich zu bestimmen. Ein Ladezustandsbereich wird als Bereich oder Band über den Summenladezustand und die Zeit aufgespannt. Das ist im oberen Diagramm im Aggregationsblock 110 angedeutet. Dort ist der Summenladezustand an der Ordinate über die Zeit an der Abszisse aufgetragen. Der Ladezustandsbereich wird dabei durch eine Obergrenze und eine Untergrenze gebildet. In diesem Bereich, also zwischen dieser Obergrenze und der Untergrenze, verläuft der Summenladezustand. Der Ladezustandsbereich kann dadurch als Flexibilitätsbereich vorgegeben werden.

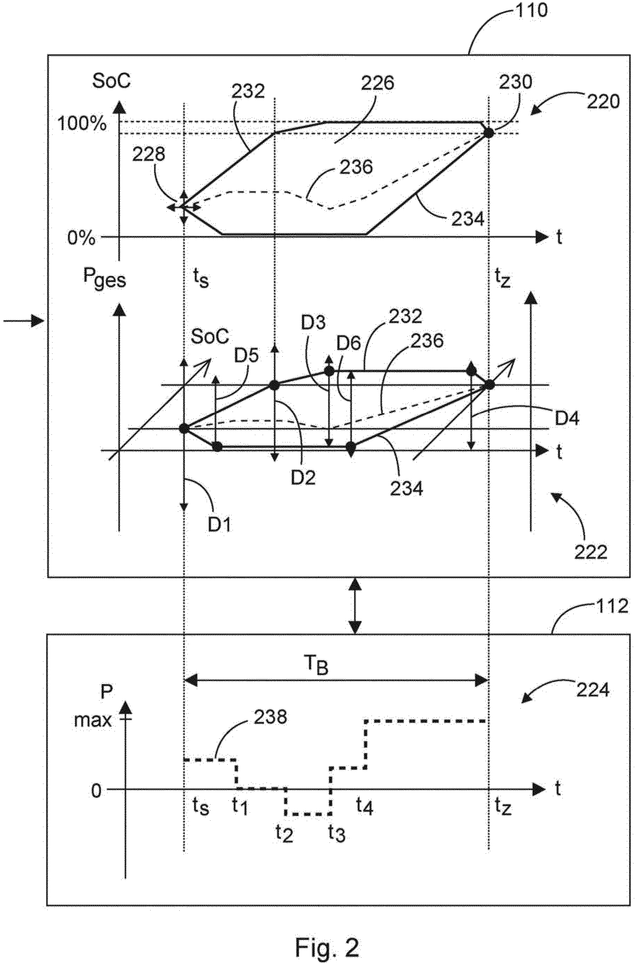

Details dazu sowie auch zu dem unteren Diagramm des Aggregationsblocks und auch zu dem unter dem Aggregationsblock 110 dargestellten Austauschleistungsblock 112 werden weiter unten zusammen mit der Figur 2 näher erläutert.

Jedenfalls kann der Aggregator, was durch das untere Diagramm im Aggregationsblock 110 veranschaulicht ist, zu unterschiedlichen Zeiten unterschiedliche Austauschleistungen und damit Austauschenergien vorgeben, was als dritte Dimension in dem Diagramm dargestellt werden kann. Solche möglichen Austauschleistungen oder Kontingente für Austauschleistungen können an den Austauschleistungsblock 112 übergeben werden. Ebenso kann der Austauschleistungsblock 112 basierend auf Verfügbarkeiten oder Angeboten im elektrischen Versorgungsnetz Austauschleistung zu unterschiedlichen Zeiten vorgeben und damit einen Verlauf der Austauschleistung vorgeben. Das ist in dem Diagramm des Austauschleistungsblocks 112 angedeutet, demnach zeitabhängig unterschiedliche Leistungsstufen vorgeschlagen werden. Der Verlauf der Austauschleistung muss allerdings nicht in Stufen verlaufen. Er könnte auch kontinuierlich verlaufen.

Eine solche Berechnung oder Vorgabe von Leistungspaketen oder -verläufen für die Austauschleistung kann in Abhängigkeit von dem Ladezustandsbereich und den Daten vorgenommen werden, die der Netzanschlussblock 108 bereitstellt bzw. die im Zusammenhang mit dem Netzanschlussblock 108 oben erläutert wurden.

Insoweit kann der Leistungsblock 112 bzw. der darin beispielhaft dargestellte Verlauf der Austauschleistung als Ergebnis oder zumindest Zwischenergebnis oder Teilergebnis des vorgeschlagenen Verfahrens verstanden werden. Aus den Daten über den Fuhrpark gemäß Fuhrparkblock 102, den Daten der Ladeinfrastruktur gemäß dem Infrastrukturblock 106, zusammen mit den Daten, die der Eingangsdatenblock 104 bereitstellt, kann ein Ladezustandsbereich bestimmt werden, insbesondere vorhergesagt werden. Der Ladezustandsbereich kann dafür als Flexibilitätsbereich vorgegeben werden.

Basierend auf diesem Ladezustandsbereich, der im oberen Diagramm des Aggregationsblocks 110 veranschaulicht ist, kann ein Verlauf der Austauschleistung über die Zeit bestimmt werden, nämlich als Austauschleistungsverlauf. Dazu können besonders Daten über das elektrische Versorgungsnetz hinsichtlich Bedarf und Angebot verwendet werden, die aufzeigen, wann eine Austauschleistung in welcher Höhe vorteilhaft ist. Der Ladezustandsbereich bietet dafür einen Variationsbereich, der auch als Flexraum bzw. Flexibilitätsbereich bezeichnet bzw. vorgegeben werden kann, und dadurch den Rahmen vorgibt, innerhalb dessen ein solcher Verlauf der Austauschleistung vorgegeben werden kann. Dabei wird die Austauschleistung so vorgegeben, dass der Summenladezustand in dem Ladezustandsbereich verbleibt.

Figur 2 zeigt einen Ausschnitt des Ablaufschemas der Figur 1, nämlich den Aggregationsblock 110 und den Austauschleistungsblock112. Der Aggregationsblock 110 weist im oberen Bereich ein Ladezustandsdiagramm 220 auf, das einen Ladezustandsbereich illustriert. Im unteren Bereich des Aggregationsblocks 110 ist ein Variationsdiagramm 222 dargestellt, das auf dem Ladezustandsdiagramm 220 aufbaut und zusätzlich exemplarisch ein paar Variationsmöglichkeiten für Austauschleistung andeutet.

Im Austauschleistungsblock 112 ist ein Austauschleistungsdiagramm 224 dargestellt, das einen möglichen Verlauf einer Austauschleistung über die Zeit veranschaulicht also einen Austauschleistungsverlauf. Alle diese drei Diagramme, nämlich das Ladezustandsdiagramm 220, das Variationsdiagramm 222 und das Austauschleistungsdiagramm 224 weisen dieselbe Zeitachse auf. Besonders ist zur Veranschaulichung ein Startladezeitpunkt t_{S} und ein Zielladezeitpunkt t_{Z} für den Ladezustandsbereich eingezeichnet und diese Zeitpunkte, die auch als Startzeitpunkt bzw. Zielzeitpunkt bezeichnet werden können, sind auch durch entsprechende senkrechte Linien in den übrigen beiden Diagrammen eingezeichnet. Der Startladezeitpunkt t_{S} und der Zielladezeitpunkt t_{Z} spannen somit den Bereitstellungszeitraum T_{B} auf, der der besseren Übersichtlichkeit halber nur im Austauschleistungsblock 112 eingezeichnet ist.

In dem Ladezustandsdiagramm 220 ist grundsätzlich der Summenladezustand SoC über die Zeit t aufgetragen. In diesem Diagramm ist der Ladezustandsbereich 226 dargestellt. Der Ladezustandsbereich 226 beginnt mit einem Startladepunkt 228 und endet mit einem Zielladepunkt 230. Der Startladepunkt 228 ist gekennzeichnet durch einen Wert des Summenladezustands SoC und den Startladezeitpunkt t_{S}. Sowohl die Höhe des Summenladezustands als auch der Startladezeitpunkt t_{S} können variieren und werden bevorzugt durch eine Vorhersage bestimmt, wie dies im Zusammenhang mit Figur 1 und dort besonders dem Fuhrparkblock 102 im Zusammenhang mit den Daten, die der Eingangsdatenblock 104 bereitstellt, erläutert wurde.

Von dem Startladepunkt 228 verläuft dann der Summenladezustand SoC zum Zielladepunkt 230. Der Zielladepunkt 230 ist durch den Zielladezeitpunkt t_{Z} gekennzeichnet und durch den zugehörigen Wert des Summenladezustands SoC.

Während der Startladezeitpunkt t_{S} variabel ist und davon abhängt, wann die Elektrofahrzeuge tatsächlich zurück zum Fuhrpark gekommen sind, kann der Zielladezeitpunkt t_{Z} recht genau festgelegt sein, nämlich dann, wenn die Elektrofahrzeuge losfahren, besonders morgens gemäß einem Fahrplan losfahren.

Auf welchem Verlauf der Summenladezustand SoC vom Startladepunkt 228 zum Zielladepunkt 230 geführt wird, ist vergleichsweise flexibel. Genau das wurde erkannt und dafür wird vorgeschlagen, lediglich Grenzen vorzugeben, die einen Flexraum bzw. Flexibilitätsbereich aufspannen, die nämlich den Ladezustandsbereich 226 aufspannen. Der Ladezustandsbereich 226 weist dabei eine zeitabhängige Obergrenze 232 und eine zeitabhängige Untergrenze 234 auf. Die zeitabhängige Obergrenze 232 kann zeitweise den Wert von 100 % erreichen. Dann wären alle Elektrospeicher komplett vollgeladen. Außerdem kann die Untergrenze 234 zumindest zeitweise den unteren Wert von 0 % erreichen. Dies dient allerdings der Veranschaulichung und häufig ist es nicht ratsam, alle Speicher komplett zu entladen, weil sie dadurch Schaden nehmen können. Somit kann als Minimalwert der Untergrenze 234 auch ein anderer Wert als 0 % gewählt werden, beispielsweise 20 %. Gleiches gilt für die Obergrenze 232, für die ein Maximalwert beispielsweise statt bei 100 % bei 90 % gewählt werden kann. Dieser Minimalwert und dieser Maximalwert können auch in Abhängigkeit von entsprechenden Werten der einzelnen elektrischen Speicher gewählt werden.

Das Ladezustandsdiagramm 220 veranschaulicht somit, dass durch die Obergrenze 232 und die Untergrenze 234 ein Ladezustandsbereich 226 aufgespannt wird, in dem sich der Summenladezustand bewegen kann. Dazu ist beispielhaft ein Summenladezustandsverlauf 236 eingezeichnet.

Im Übrigen ist dem Ladezustandsdiagramm 220 auch zu entnehmen, dass sich durch eine Variation des Startladepunktes 228 auch der Ladezustandsbereich 226 verändert, zumindest in seinem Anfangsbereich in der Nähe dieses Startladepunktes 228. Entsprechend hängt auch der Ladezustandsbereich 226 von der Vorhersage des Summenladezustands SoC zu Beginn des Ladezustandsbereichs 226 ab, und er hängt auch von der Vorhersage hinsichtlich des Startladezeitpunkts ts ab.

Das Variationsdiagramm 222 beinhaltet das Ladezustandsdiagramm 220, wobei die Koordinatenachse für den Summenladezustand SoC in die Zeichenebene hineinweist. Die Zeitachse ist geblieben und es ist eine Koordinatenachse für die Leistung P hinzugekommen. Diese Leistung P zeigt in dem Variationsdiagramm 222 an, bei welchem Eckpunkt der Obergrenze 232 bzw. Untergrenze 234 wie viel Austauschleistung abgegeben bzw. aufgenommen werden kann. Dazu sind die Doppelpfeile D1 - D6 eingezeichnet. Diese Doppelpfeile geben somit Werte für P und damit eine Leistungsbegrenzung auf eine mögliche Weise an.

Der Doppelpfeil D1 betrifft den Startladepunkt 228 und zeigt an, dass in dem Moment sowohl positive als auch negative Austauschleistung in gleichem Maße angeboten werden kann. Der Doppelpfeil D2 ist an der Obergrenze 232 eingezeichnet und dort kann die Austauschleistung noch erhöht werden, insbesondere kann sie aber auch noch viel stärker mit negativem Wert angeboten werden. Beim Doppelpfeil D3, und Gleiches gilt für den Doppelpfeil D4, ist die Obergrenze 232 bei ihrem Maximalwert angekommen und dann kann nur noch negative Austauschleistung angeboten werden. Bei dem Doppelpfeil D4 kommt hinzu, dass negative Austauschleistung nicht nur angeboten werden kann, sondern angeboten werden muss, um den Zielladepunkt 230 noch zu erreichen. Allerdings kann der Zielladepunkt 230 auch als Mindestwert vorgegeben sein und dann könnte der Summenladezustand auch über diesem Zielladepunkt 230 liegen und dann würde der Doppelpfeil D4 auch nur eine mögliche negative Austauschleistung andeuten. Die Austauschleistung könnte auch null sein, sie kann aber nicht positiv sein, was der Doppelpfeil D4 anzeigt.

An dieser Stelle sei wiederholt, dass eine positive Austauschleistung eine solche ist, bei der die Speicher geladen werden, eine positive Austauschleistung ist also eine solche, bei der Leistung aus dem Netz entnommen und in die elektrischen Speicher eingespeichert wird.

Die Doppelpfeile D5 und D6 zeigen jeweils an, dass nur eine positive Austauschleistung möglich ist, weil hier die Untergrenze 234 bereits den minimalen Wert erreicht hat.

Insoweit zeigen diese Doppelpfeile D1 - D6 lediglich Möglichkeiten an und helfen, einen Rahmen zu definieren, in dem die Austauschleistung dann tatsächlich variiert werden kann.

Der Summenladezustandsverlauf 236 gibt somit eine Reihe vieler Summenladezustände an. Für jeden dieser Summenladezustände, also für jeden Punkt auf dem Summenladezustandsverlauf 236, kann ein Intervall bzw. ein minimaler und ein maximaler Wert vorgegeben werden. Für jeden Wert ergibt sich dann auch ein Trend für den Summenladezustand, der zu einem Verlauf durch den Ladezustandsbereich führt, der andere Austauschleistungen ermöglicht. Ständige Veränderungen können dabei zu einem kontinuierlichen Verlauf führen. Fährt aber ein Elektrofahrzeug ab oder kommt es an, so ändert sich der Summenladezustand sprunghaft. Der Summenladezustand kann auch synonym als Gesamtladezustand bezeichnet werden.

Es ist nun beispielhaft ein Verlauf einer Austauschleistung, also ein Austauschleistungsverlauf 238 in dem Austauschleistungsdiagramm 224 des Austauschleistungsblocks 112 dargestellt. Demnach beginnt zum Startladezeitpunkt t_{S} die Austauschleistung und damit der Austauschleistungsverlauf 238 mit einem positiven Wert. Es wird also Leistung aus dem elektrischen Versorgungsnetz entnommen und zum Laden der Speicher verwendet. Entsprechend steigt der Summenladezustand bzw. der Summenladezustandsverlauf 236 an. Das ist sowohl in dem Ladezustandsdiagramm 220 als auch dem Variationsdiagramm 222 zu erkennen. Zum Zeitpunkt t₁ fällt der Austauschleistungsverlauf 238 auf null ab und entsprechend weist der Summenladezustandsverlauf 236 einen waagerechten Bereich auf.

Zum Zeitpunkt t₂ ist geplant worden, also vorhergesagt worden, und wird dann noch umgesetzt, Leistung in das elektrische Versorgungsnetz einzuspeisen, weil hierein besonders hoher Bedarf vorhergesagt wurde, der sich auch daraus ergeben kann, dass des nachts, wenn eigentlich wenig Leistung benötigt wird, ein großer Erzeuger abgeschaltet wird, sodass dennoch ein Leistungsbedarf im elektrischen Versorgungsnetz entstehen kann.

Diese negative Austauschleistung ab dem Zeitpunkt t₂ ist auch in dem Summenladezustandsverlauf 236 durch eine abfallende Flanke zu erkennen.

Zum Zeitpunkt t₃ wird die Austauschleistung wieder auf einen positiven Wert geändert und entsprechend steigt der Summenladezustand wieder an. Zum Zeitpunkt t₄ wird die Austauschleistung nochmals erhöht, sodass der Summenladezustandsverlauf 236 ab t₄ auch noch etwas steiler verläuft. Auf diese Weise werden dann schließlich alle Speicher voll geladen, wodurch der Summenladezustandsverlauf 236 den Zielladepunkt 230 erreicht.

Besonders wird vorgeschlagen, dass der Austauschleistungsverlauf 238, wie er beispielhaft in dem Austauschleistungsdiagramm 224 dargestellt ist, als Vorhersage vorherbestimmt wird. Der Netzbetreiber oder eine Netzsteuereinheit kann dann mit dieser Vorhersage arbeiten und das Netzmanagement entsprechend darauf einstellen.

Gleichwohl besteht besonders im Bereich von t_{S} bis t₄ die Möglichkeit, *ad hoc* die Austauschleistung zu variieren, also den eigentlich vorgegebenen Austauschleistungsverlauf 238 zu verändern. Das kann beispielsweise dann geschehen, wenn unerwartet ein Leistungsbedarf oder auch ein Leistungsüberangebot im elektrischen Versorgungsnetz auftritt. Ein solches kann beispielsweise auch durch eine Veränderung der Netzfrequenz erkannt werden. So wird vorgeschlagen, dass dann, wenn die Netzfrequenz, die das elektrische Versorgungsnetz aufweist, einen vorbestimmten Grenzwert überschreitet, die Austauschleistung erhöht wird, also mehr Leistung aus dem Netz entnommen wird, und/oder dass in dem Fall, wenn die Netzfrequenz unter einen unteren Frequenzwert abfällt, die Austauschleistung verringert wird, also mehr Austauschleistung in das elektrische Versorgungsnetz eingespeist wird.

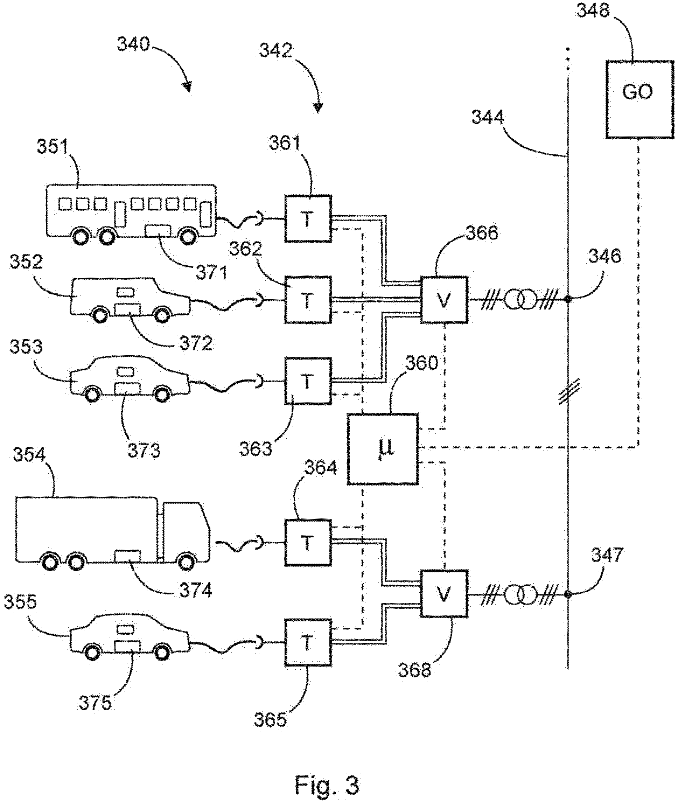

Figur 3 zeigt einen Fuhrpark 340 mit einer Ladeinfrastruktur 342, die an ein elektrisches Versorgungsnetz 344 über zwei Netzanschlusspunkte 346 und 347 angeschlossen ist. Das elektrische Versorgungsnetz verfügt über eine Netzsteuereinheit 348, die das elektrische Versorgungnetz 344 steuern kann. Die Netzsteuereinheit 348 kann auch durch einen Netzbetreiber betrieben werden.

Der Fuhrpark 340 weist exemplarisch fünf Elektrofahrzeuge 351 - 355 auf, die jeweils an eines der Ladeterminals 361 - 365 angeschlossen sind. Die Ladeterminals können über Verteilerknoten 366 bzw. 368 über jeweils einen Netzanschlusspunkt 346 bzw. 347 mit dem elektrischen Versorgungsnetz 344 verbunden sein.

Somit können die drei Elektrofahrzeuge 351 - 353 über den Netzanschlusspunkt 346 in das elektrische Versorgungsnetz 344 einspeisen bzw. daraus Leistung entnehmen und die Elektrofahrzeuge 354 und 355 über den Netzanschlusspunkt 347 Leistung in das elektrische Versorgungsnetz 344 einspeisen oder daraus entnehmen.

Gleichwohl ist eine Ladesteuereinheit 360 vorgesehen, die jedes einzelne Ladeterminal 361 - 365 und damit jeden Speicher der Elektrofahrzeuge 351 - 355 ansteuern kann. Die Ladesteuereinheit 360 kann Teil einer zentralen Steuereinheit sein, oder sie bilden. Außerdem ist als optionale Möglichkeit vorgesehen, dass die Ladesteuereinheit auch die Verteilerknoten 366 und 368 ansteuern kann. Außerdem ist vorgesehen, dass die Ladesteuereinheit 360 mit der Netzsteuereinheit 348 kommunizieren kann. Die Ladesteuereinheit 360 kann dazu Informationen an die Netzsteuereinheit 348 geben sowie Informationen von ihr erhalten.

Grundsätzlich sind die Informationsverbindungen zwischen der Ladesteuereinheit 360 einerseits und den Ladeterminals 361 - 365, den Verteilerknoten 366 und 368 sowie der Netzsteuereinheit 348 gestrichelt dargestellt. Über die übrigen Leitungen, die durchgezogen gezeichnet sind, ist eine Leistungs- bzw. Energieübertragung möglich.

Die Ladesteuereinheit 360 kann Informationen über Eigenschaften der Ladeinfrastruktur 342 gespeichert haben und/oder als aktuelle Daten empfangen. Außerdem kann sie Informationen über Eigenschaften der elektrischen Speicher der Elektrofahrzeuge 351 - 355 gespeichert haben und, insbesondere über die Ladeterminals 361 - 365, aktuelle Informationen über den Ladezustand und gegebenenfalls weitere Eigenschaften der jeweiligen Speicher der Elektrofahrzeuge 351 - 355 erhalten und verarbeiten.

Damit kann mit der Ladesteuereinheit 360 insgesamt die Austauschleistung gesteuert werden, die zwischen der Ladeinfrastruktur 342 und dem elektrischen Versorgungsnetz 344 ausgetauscht wird. Diese Austauschleistung ist insoweit die Summe der Teilaustauschleistungen, die über den Netzanschlusspunkt 346 und den Netzanschlusspunkt 347 mit dem elektrischen Versorgungsnetz 344 ausgetauscht werden.

In den Elektrofahrzeugen 351 - 355 sind zudem zum Zwecke der Veranschaulichung elektrische Speicher 371 - 375 angedeutet.

Es wird somit ein Verfahren vorgeschlagen, das die Kapazität eines Fuhrparks aus Elektrofahrzeugen vorteilhaft ausnutzt. Hierdurch können Systemdienstleistungen, besonders zum Netzstützen, bereitgestellt werden. Dafür kann eine Reserveenergie angeboten werden und es ist auch ein Arbitragegeschäft möglich, beides kann dem elektrischen Versorgungsnetz bzw. einem Netzbetreiber angeboten werden.

Das Verfahren kann im Grund auf jegliche Ladeinfrastruktur und auf Strukturen mit schnellladefähigen Gleichstromladeterminals in einem logistischen Verbundnetz angewendet werden. Es wird eine bidirektionale Ladeinfrastruktur ausgenutzt. Vorteilhafterweise kann eine Kombination mit stationären Speichern, zumindest mit einem stationären Speicher, vorgenommen werden.

Es wurde erkannt, dass eine Ladeinfrastruktur, welche jederzeit ohne Einschränkungen immer die volle Ladeleistung mit dem elektrischen Versorgungsnetz, das vereinfachend auch als Netz bezeichnet wird, austauschen kann, eine starke Überdimensionierung der Netzinfrastruktur erfordert und damit höhere Anschluss- und Netznutzungskosten hervorruft. Es wurde zudem erkannt, dass auch die Strompreisbeschaffung durch eine Verschiebung oder sogar Rückspeisung von Energie optimiert werden kann. Bei einerVerschiebung der Energie, die zum Laden der Elektrofahrzeuge verwendet wird, wird die zum Laden benötigte Energie nicht möglichst schnell abgerufen, sondern zumindest teilweise später abgerufen und damit auf diesen späteren Bereich verschoben.

Als Synergieeffekte kann besonders erreicht werden, dass durch die Kombination aus günstiger Strombeschaffung, dem Anbieten von Systemdienstleistung und einer geringeren Netzbeanspruchung, und damit geringeren Netzentgelten und gegebenenfalls geringerem Netzausbau, sich letztlich für den Betreiber der Ladeinfrastruktur geringere Energiekosten zum Betreiben der Fahrzeuge ergeben.

Somit wird besonders auch vorgeschlagen, eine klassische Ladeinfrastruktur mit einem einfachen Lastmanagement zu verbessern.

Durch die vorgeschlagene technische Lösung kann eine Strompreisminimierung durch bessere Ausnutzung der Netze und Erhöhung des kommerziellen Nutzungsgrades der speichertragenden Kraftfahrzeuge erreicht werden. Es können zusätzliche Einnahmen dadurch generiert werden, dass die mobilen Speicher der Elektrofahrzeuge für Systemdienstleistungen und ein Stromarbitragegeschäft genutzt werden, wenn diese an dem jeweiligen Ladeterminal bzw. Ladepunkt angeschlossen sind. Es wird zudem vorgeschlagen, dass die beschriebenen Vorteile auch bewertet werden unter Berücksichtigung anwendungsspezifischer Verschleißkosten. Dazu kann ein von dem jeweiligen Ladezustand und/oder von der jeweiligen Ladeleistung abhängiger Verschleißindikator ermittelt und berücksichtigt werden.

Es liegt besonders auch die Idee zugrunde, eine sinnvolle Aggregation von Ladepunkten bzw. elektrischen Speichern durchzuführen, was optional im Zusammenspiel mit weiteren lokalen Speichern oder mobilen Speichern erfolgen kann. Besonders wurde erkannt, dass elektrische Kraftfahrzeuge im öffentlichen Personennahverkehr dadurch beim Laden die Stromspeicher netzdienlich einsetzen können.

Bei der vorgeschlagenen Aggregation, die besonders im Zusammenhang mit der Figur 2 und dort besonders im Zusammenhang mit dem Aggregationsblock 110 beschrieben ist, wird eine technische Aggregation mit einem Fahrplan und einer Ladezustands- und Ankunftsprognose der Elektrofahrzeuge kombiniert. Dadurch kann ein sehr großer Anteil der Speicherkapazität mit einer hohen Verfügbarkeit für globale und lokale Systemdienstleistungen und/oder Stromarbitragegeschäfte genutzt werden.

Besonders wird vorgeschlagen, dass für die Aggregation folgende Eingangsgrößen und Rahmenbedingungen genutzt werden, nämlich die Speichergröße jedes Fahrzeugs, die auch als Akkugröße bezeichnet werden kann, lebensdauerrelevante Akkucharakteristika, ladezustandsabhängiger und leistungsabhängiger Verschleißindikator, Akkuqualität, also Speicherqualität, des Speichers des entsprechenden Elektrofahrzeugs, Eigenschaften des Ladepunktes des Elektrofahrzeugs, eine Prognose über den Ladezustand bei Ankunft des Fahrzeugs bzw. der Fahrzeuge, eine Prognose hinsichtlich des Ankunftszeitpunkts der Elektrofahrzeuge, ein Zielladezustand als Ladezustand zum Ende des Ladezustandsbereichs, wenn die Elektrofahrzeuge also wieder abfahren sollen, Abfahrtszeiten der Elektrofahrzeuge, wobei die vier letztgenannten Eingangsgrößen abhängig von einem Fahrplan berücksichtigt werden können, und eine Ladeleistung in bidirektionaler Hinsicht. Letzter Punkt beinhaltet eine Akkuleistung, bzw. Speicherleistung, und/oder eine Ladepunktleistung, berücksichtigt also Eigenschaften des elektrischen Speichers wie auch des Ladeterminals oder eines Teils der Ladeinfrastruktur.

Besonders wird vorgeschlagen, dass der Aggregator in Abhängigkeit von den genannten Rahmenbedingungen einen Flexibilitätsraum erzeugt, der insbesondere dem Ladezustandsbereich entspricht oder beinhaltet, in dem sich der Summenladezustand, die Austauschleistung und der Verschleißindikator über die Zeit entwickeln. Dieser Flexibilitätsraum, Flexibilitätsbereich bzw. Ladezustandsbereich kann auch als Band verstanden oder bezeichnet werden. Basierend auf einem solchen Band kann ein Netzbetreiber oder Stromhändler über eine Netzsteuereinheit einen optimierten Stromfahrplan vorgeben. Dieser berücksichtigt sowohl die Nutzungskosten der aggregierten Stromspeicher, also der elektrischen Speicher der Fahrzeuge, einen aktuellen Preis, insbesondere den Börsenpreis, lokale Netznutzungskosten als auch Gelegenheiten für die Bereitstellung von globalen und lokalen Systemdienstleistungen sowie Gelegenheiten für ein Stromarbitragegeschäft.

Dazu kann der Aggregator den Stromfahrplan empfangen und die einzelnen Ladepunkte, nämlich mit angeschlossenen mobilen und/oder stationären Speichern so regeln, dass der Fahrplan eingehalten wird, nämlich auch bei Abweichungen einer vorher erstellten Prognose.

Zusätzlich kann ein Netzbetreiber basierend auf dem Flexibilitätsraum auch direkt eine Systemdienstleistung anfordern oder in Anspruch nehmen, oder dem Stromhändler ein Lasttransferpotential anbieten. Es kommt auch in Betracht, dass der Netzbetreiber zeitabhängige Leistungsgrenzen vorgibt, die zu realisieren sind.

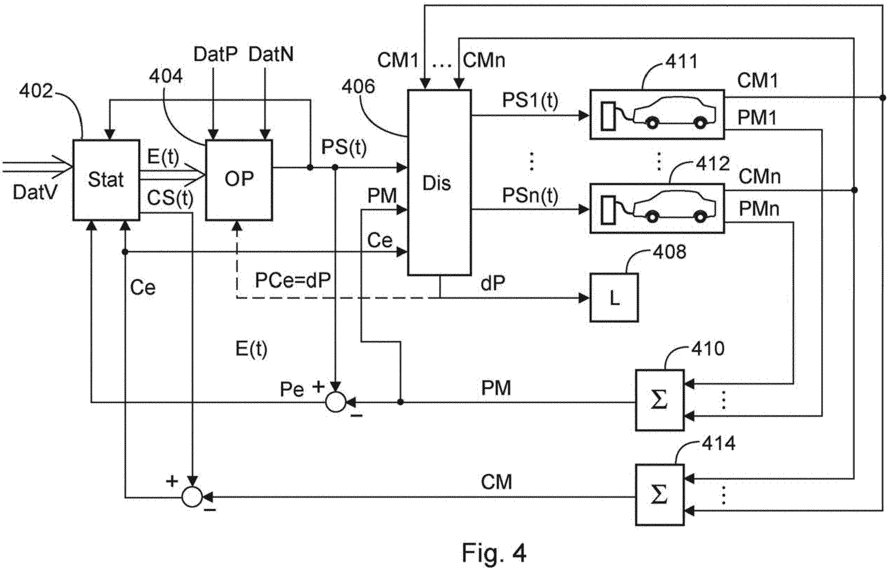

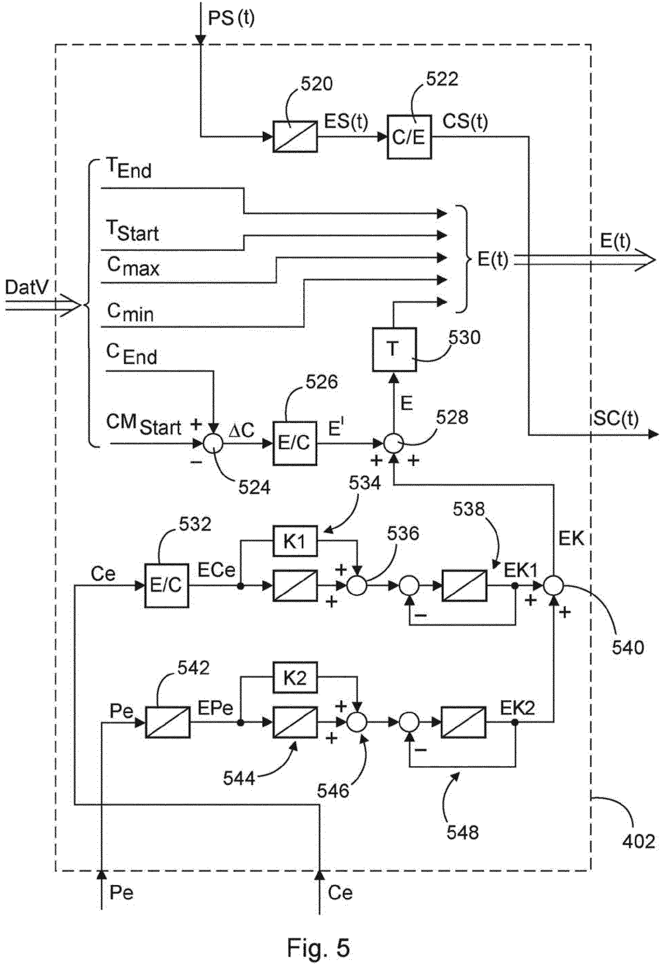

Die Regelungsstruktur der Figur 4 zeigt einen Vorgabeblock 402, in dem insbesondere eine Energievorgabe bestimmt wird, die dort als E(t) bezeichnet wird. Diese Energievorgabe umfasst jedenfalls die Energiemenge, die die Ladeinfrastruktur zum Laden ihrer Leistungseinheiten, also insbesondere zum Laden ihrer Elektrofahrzeuge benötigt, nämlich für einen kommenden Ladezeitraum und damit für einen kommenden Steuerzeitraum. Die Energievorgabe kann im einfachsten Fall einen einfachen Wert vorgeben, nämlich wie viel Energie die Ladeinfrastruktur benötigt. Es können aber auch weitere Werte enthalten sein, nämlich wie viel Energie die Ladeinfrastruktur temporär abgeben kann, also dem elektrischen Versorgungsnetz bereitstellen kann. Die Energievorgabe ist in der Figur 4 als Ausgang des Vorgabeblocks 402 als Pfeil mit Doppellinie gekennzeichnet, weil damit angedeutet werden soll, dass weitere Informationen enthalten sein können. Welche weiteren Informationen in Betracht kommen, wird in Figur 5 noch erläutert. In Figur 5 wird auch erläutert werden, welche Eingangsdaten berücksichtigt werden können, die in Figur 4 als DatV einen Eingang des Vorgabeblocks 402 bilden. Auch hier können jedenfalls mehrere Daten vorgesehen sein, was durch den Pfeil mit Doppellinie angedeutet wird.

Die Energievorgabe bildet den Eingang für einen Planungsblock 404. Der Planungsblock 404 kann dabei außerhalb der Ladeinfrastruktur, also insbesondere außerhalb beispielsweise eines Betriebshofs, oder außerhalb einer zentralen Steuereinheit die ansonsten die Umsetzung des Steuerns der Austauschleistung erreicht, realisiert sein. So kommt in Betracht, dass eine externe Institution wie ein Netzbetreiber oder ein Stromvermarkter diesen Planungsblock 404 realisiert bzw. die darin ausgeführte Planung umsetzt.

Der Planungsblock 404 erhält somit als Eingabe die Energievorgabe und bestimmt davon abhängig einen Austauschleistungsverlauf PS(t), der angibt, wann in dem Steuerzeitraum wie viel Leistung an die Ladeinfrastruktur abgegeben wird oder sogar zeitweise von ihr aufgenommen wird. Dieser Austauschleistungsverlauf ist somit so vorzugeben, dass am Ende des Steuerzeitraums wenigstens die angeforderte Energiemenge, die die Energievorgabe bildet oder darin enthalten ist, erreicht wird.

Der beispielhaft genannte Netzbetreiber oder Vermarkter kann im Wesentlichen den Austauschleistungsverlauf frei vorgeben, ist aber an einige Randbedingungen gebunden. Eine Randbedingung ist, dass Grenzen für die maximale Leistungsabgabe oder-aufnähme vorhanden sind. Im einfachsten Fall kann diese maximale Leistungsübertragung dem Betrag nach einen festen Wert aufweisen. Ein solcher Wert wird daher als DatP dem Planungsblock 404 vorgegeben. Das ist aber im Wesentlichen symbolisch zu verstehen, denn besonders eine feste Leistungsgrenze kann auch ein fest hinterlegter Wert sein. Leistungsgrenzen können sich auch ändern, wenn beispielsweise ein Netzverknüpfungspunkt die Größe der Austauschleistung begrenzt und zu unterschiedlichen Zeiten unterschiedlich viel Leistung zu anderen Zwecken als zum Bereitstellen für die Ladeinfrastruktur übertragen werden muss.

Der Gestaltungsfreiraum, der aber für das Vorgeben der Austauschleistungsverlaufs bleibt kann besonders genutzt werden, um Netzanforderungen zu berücksichtigen. Besonders wird der Austauschleistungsverlauf so vorgegeben, dass viel Leistung an die Ladeinfrastruktur übertragen wird, wenn viel Leistung verfügbar ist, bzw. wenn ansonsten im elektrischen Versorgungsnetz wenig Leistung angefragt wird. Das ist eine Besonderheit des Verfahrens, die hier ausgenutzt wird. Solche Informationen über Netzanforderungen sind als Eingangsgröße DatN für den Planungsblock 404 symbolisiert.

Als gestrichelter möglicher Eingang für den Planungsblock 404 ist noch ein Speicherleistungsfehler PCe angedeutet. Hier kommt in Betracht, was später noch im Detail beschrieben wird, dass eine Leistungsanfrage besonders an den beispielhaft genannten Netzbetreiber oder Vermarkter während des Ablaufs des Steuerzeitraums gerichtet wird. Das kommt für den Fall in Betracht, wenn der vorgegebene Austauschleistungsverlauf sich als nicht ausreichend erweisen sollte, wenn also durch den vorgegebenen Austauschleistungsverlauf P(t) nicht ausreichend Leistung oder zu viel Leistung bereitgestellt wird.

Der vorgegebene Austauschleistungsverlauf PS(t) wird an einen Verteilungsblock 406 gegeben und zudem an den Vorgabeblock 402 zurückgegeben. Der Vorgabeblock 402 kann daraus besonders einen zu erwartenden Ladezustandsverlauf CS(t) bestimmen und diesen Wert ausgeben, besonders um ihn dann mit einem erreichten Ladezustand zu vergleichen.

Der Austauschleistungsverlauf P(t) wird somit an den Verteilungsblock 406 gegeben. Der Austauschleistungsverlauf betrifft die insgesamt zwischen der Ladeinfrastruktur und dem elektrischen Versorgungsnetz auszutauschende Leistung, die insbesondere für viele Elektrofahrzeuge zum Laden oder Entladen verwendet werden soll. Somit soll in dem Verteilungsblock 406 aus dieser Gesamtleistung gemäß dem Austauschleistungsverlauf eine Verteilung auf viele Einzelleistungen PS1(t) - PSn(t) vorgenommen werden. Der Index n gibt die Anzahl verwendeter Leistungseinheiten bzw. insbesondere die Anzahl von Elektrofahrzeugen bzw. die Anzahl von Ladeterminals wieder. Entsprechend sind zwei Ladeterminals mit angeschlossenem Elektrofahrzeug als Terminalblocks 411 und 412 gekennzeichnet.

Der Verteilungsblock 406 gibt außerdem einen Leistungsfehler dP aus. Dieser Leistungsfehler dP kann eine Abweichung zwischen benötigter Leistung und gemäß Austauschleistungsverlauf PS(t) vorgegebener Leistung sein. Dieser Leistungsfehler kann dadurch ausgeglichen werden, dass eine steuerbare Last 408 ihre eigene Leistungsaufnahme um diesen Wert, oder einen Teil davon, verändert. Die steuerbare Last 408 kann auch einen Stromerzeuger umfassen und kann auch synonym als steuerbarer Verbraucher bezeichnet werden.

Über diesen Verteilungsblock 406 wird somit die Leistungsverteilung auf die einzelnen Elektrofahrzeuge gemäß den Terminalblocks 411 - 412 gesteuert bzw. auch geregelt. Die eigentliche Umsetzung der jeweils einzelnen Leistungsvorgaben PS1(t) - PSn(t) erfolgt jeweils in den Terminalblocks 411 - 412, die natürlich repräsentativ für n-Terminalblocks stehen.

Die Ladevorgänge werden gleichwohl auch zentral überprüft und dazu wird von jedem Terminalblock, 411, 412 sowohl der einzelne Ladezustand CM1 - CMn erfasst, als auch die jeweils tatsächlich aufgenommene Leistung PM1 bzw. PMn. Der Buchstabe M bezeichnet somit hier und auch ansonsten in den Figuren 4 - 7 eine zugrundeliegende Messung oder anderweitige Erfassung.

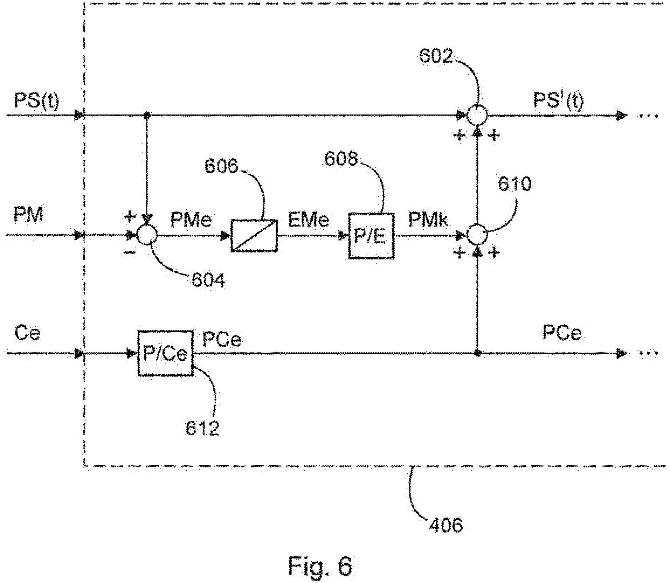

Bei dieser Überwachung werden sämtliche erfasste Einzelleistungen PM1 - PMn in dem Summierblock 410 zu einer insgesamt erfassten Leistung PM, die somit eine Summenleistung der Einzelleistung ist, aufaddiert. Diese Summenleistung PM kann in dem Verteilungsblock 406 berücksichtigt werden, um ggf. die Leistungsverteilung nachzujustieren. Details dazu werden in Figur 6 beschrieben. Eine Berücksichtigung der Einzelleistungen PM1 - PMn kommt grundsätzlich auch in Betracht, wird hier aber als entbehrlich angesehen, da die konkrete Umsetzung der Steuerung der Einzelleistungen in den Terminalblocks 411 - 412 erfolgt.

Die erfassten Einzelladezustände CM1 - CMn werden ebenfalls aufsummiert, nämlich in dem Summierblock 414. Diese Summe der Ladezustände CM wird dem Summierblock 414 von ausgegeben und kann mit einem Ladezustandsverlauf CS(t) der in dem Vorgabeblock 402 vorgegeben werden kann, verglichen werden. Dadurch kann eine Ladezustandsabweichung Ce für den Gesamtladezustand, also die Summe aller Ladezustände, ermittelt werden. Dieser Regelfehler der Gesamtladezustände Ce kann in dem Vorgabeblock 402 berücksichtigt werden, um eine zukünftige Vorgabe, nämlich besonders der Energievorgabe, zu verbessern. Details werden dazu in Figur 5 noch erläutert.

Im Übrigen wird auch vorgeschlagen, einen Regelfehler zwischen der Summenleistung und der vorgegebenen Leistung gemäß dem Austauschleistungsverlauf PS(t) zu ermitteln, der hier als Pe bezeichnet wird und ebenfalls in dem Vorgabeblock 402 berücksichtigt werden kann. Auch hier kann eine Adaption vorgesehen sein, die in Figur 5 noch erläutert wird.

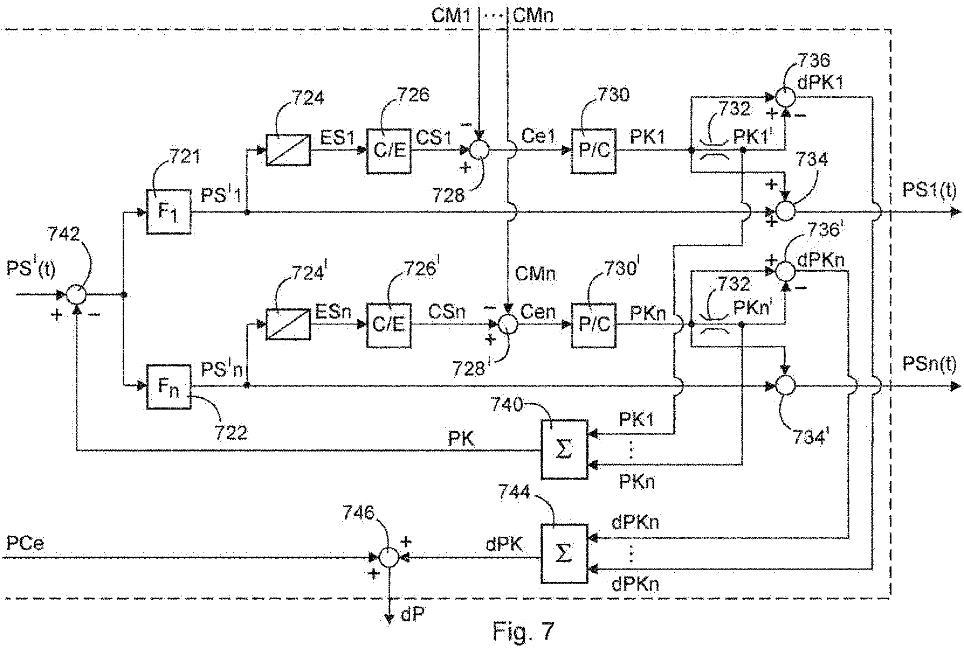

Außerdem werden die Einzelladezustände CM1 - CMn in den Verteilungsblock 406 auch im Einzelnen berücksichtigt. Hier ist besonders vorgesehen, die erreichten Ladezustände mit vorgegebenen bzw. rechnerisch ermittelten Ladezustandsverläufen abzugleichen und ggf. eine Nachregelung vorzusehen. Details dazu werden in der Figur 7 erläutert.

Die Blöcke 402, 406, 410 und 414 bzw. ihre Funktionalitäten, können in einer zentralen Steuereinheit einer Ladeinfrastruktur enthalten, zusammengefasst bzw. realisiert sein.

Figur 5 erläutert eine vereinfachte Struktur des Vorgabeblocks 402 der Figur 4. Aus dem AustauchleistungsverlaufPS(t) wird über einen Integrator 520 ein Energieverlauf ES(t) bestimmt. Aus dem Energieverlauf ES(t) kann über den Dimensionierungsblock 522 ein Verlauf eines Gesamtladezustand CS(t) bestimmt werden, der als Ladezustandsverlauf CS(t) bezeichnet wird. Der Dimensionierungsblock 522 ist im Grunde nur als Faktor ausgestaltet und dieser Faktor hängt von allen betroffenen elektrischen Speichern ab, nämlich von ihrer Dimensionierung. Dieser Faktor kann berechnet werden als Quotient zwischen einem Ladezustand und der dafür notwendigen Energiemenge. Es kommt auch in Betracht, dass dieser Faktor angepasst wird, wenn sich beispielsweise Eigenschaften der Elektrospeicher durch Abnutzung verschlechtern, oder durch Austausch durch einen neuen Energiespeicher wieder verbessern. Der Dimensionierungsblock 522 berücksichtigt insoweit nur die Gesamtheit aller Elektrospeicher für den Moment. Grundsätzlich kommt aber auch in Betracht, dass dieser Faktor in dem Dimensionierungsblock 522 nicht angepasst werden muss, wenn ausreichend viele Elektrofahrzeuge und damit Elektrospeicher vorhanden sind, die regelmäßig und gleichmäßig gewartet bzw. ggf. getauscht werden. Jedenfalls wird der so berechnete Ladezustandsverlauf CS(t) von dem Vorgabeblock 402 ausgegeben.

Eingangsdaten, die in dem Vorgabeblock 402 berücksichtigt werden können, sind in dem Datenvektor DatV zusammengefasst. Dies beinhaltet einen Anfangsgesamtladezustand CMₛₜₐᵣₜ, der zu Beginn des Steuerzeitraums erwartet wird, und ein Endladezustand C_{end}, der am Ende des Steuerzeitraums gewünscht ist. Der Vorgabeblock 402 soll möglichst über 24 Stunde vor Beginn des Steuerzeitraums zumindest die gewünschte Energiemenge vorberechnen. Dazu führen Wahrscheinlichkeitsüberlegungen zu dem Anfangsladezustand CMₛₜₐᵣₜ. Dies beinhaltet Erfahrungswerte über Restladezustände der Elektrofahrzeuge, wenn sie an die Ladeinfrastruktur zurückkehren. Der Endladezustand ist hingegen ein gewünschter Wert und beträgt im einfachsten Fall 100%. Er kann aber auch geringer gewählt werden, zum Beispiel 90%, um dadurch auch einen Spielraum zu ermöglichen.

Jedenfalls wird eine Differenz aus dem Endladezustand und dem Anfangsladezustand an der Summierstelle 524 gebildet und die resultierende Ladedifferenz ΔC wird ebenfalls über einen Dimensionierungsblock 526 in eine äquivalente Energiemenge E' umgerechnet. Diese resultierende Energiemenge E' könnte bereits die anzufordernde Energiemenge sein. Zur Verbesserung der Steuerung der Austauschleistung wird hier aber vorgeschlagen, etwaige Abweichungen aus früheren Verläufen zu berücksichtigen und daraus ermittelte Korrekturwerte an der Summierstelle 528 aufzuschalten. Das Ergebnis ist dann die vorzugebene Energiemenge E.

Nur symbolisch ist ein Zeitblock 530 vorgesehen, der andeuten soll, dass die gewünschte Energiemenge nicht ständig kontinuierlich ausgegeben werden muss, sondern jeweils für zu planende Steuerzeiträume ausgegeben wird, also zeitdiskret. Sie können alternativ aber auch kontinuierlich ausgegeben werden und empfängerseitig nur bei Bedarf ausgewertet werden. Dieser Gedanke, dass Werte nicht sofort von dem Vorgabeblock 402 ausgegeben werden müssten, gilt grundsätzlich auch für die übrigen ausgegebenen Werte, ohne dass dort ein solcher Zeitblock 530 eingezeichnet ist. Jedenfalls kann die vorzugebene Energiemenge E Teil der Energievorgabe E(t) sein.

Als weiterer Eingangsparameter sind ein Mindestladezustand Cₘᵢₙ, ein maximaler Ladezustand Cₘₐₓ, eine Anfangszeit Tₛₜₐᵣₜ und eine Endzeit T_{end} vorgesehen. Die letztgenannten Zeiten können auch als Startzeitpunkt bzw. Zielzeitpunkt bezeichnet werden. Diese Daten können als Teil der Energievorgabe mit ausgegeben werden, was die Figur 5 veranschaulicht. Es kommt aber auch in Betracht, dass diese Daten noch weiter umgerechnet werden. So kann der Mindestladezustand besonders zusammen mit dem Anfangsladezustand in eine Energieuntergrenze umgerechnet und ausgegeben werden. Eine solche Energieuntergrenze würde bezeichnen, wie viel Energie maximal von der Ladeinfrastruktur temporär abgegeben werden kann, nämlich bevor die Elektrospeicher geschädigt werden. Gleiches gilt für den maximalen Ladezustand, besonders, wenn dieser oberhalb des Endladezustands liegt, wenn also der Endladezustand 90% beträgt und der Maximalladezustand 100% beträgt, kann auch daraus eine maximale Energiemenge berechnet werden. Eine solche maximale Energiemenge gibt an, wie viel Energie maximal von der Ladeinfrastruktur aufgenommen werden kann. Dieser Wert kann höher liegen als die angeforderte Energie, nämlich genau dann, wenn nicht gefordert wird, sämtliche Elektrospeicher auf 100% aufzuladen. Dadurch kann ein entsprechender Spielraum vorgegeben werden.

Die Anfangszeit und die Endzeit definieren den Steuerzeitraum, in dem, der Leistungsaustausch stattfinden soll. Diese beiden Zeiten können auch feste Werte sein, zum Beispiel immer abends um 6 Uhr als Startzeit und morgens um 5 Uhr als Endzeit. Die Zeiten bzw. ihre Bezeichnungen beziehen sich insoweit auf den Ladevorgang und nicht auf den Zeitraum in dem die Elektrofahrzeuge ihren Dienst verrichten.

Ein weiterer Eingang des Vorgabeblocks 402 ist eine Regelabweichung des Gesamtladezustands Ce. Dieser kann in dem Vorgabeblock 402 zum Ausregeln eines Regelfehlers verwendet werden bzw. auch für eine Adaption des Bestimmens der Energievorgabe. Figur 5 veranschaulicht dazu eine Variante.

Demnach wird die Regelabweichung des Gesamtladezustands Ce über einen Dimensionierungsblock 532 gegeben, dessen Wert im Übrigen dem inversen Wert des Dimensionierungsblocks 522 entsprechen kann, um eine Regelabweichung der Gesamtenergie ECe zu bestimmen. Es gibt noch eine andere Möglichkeit eine Regelabweichung der Energie zu bestimmen, die nachfolgend noch beschrieben wird und Figur 5 dargestellt ist.

Diese Regelabweichung der Energiemenge ECe basiert somit auf der Überwachung des Gesamtladezustands, was durch den beibehaltenden Buchstaben C angedeutet wird. Jedenfalls wird diese Regelabweichung in der hier vorgeschlagenen Variante in einen ersten PI-Regler 534 gegeben. Dieser erste PI-Regler weist also einen Integrator und einen P-Anteil auf. Er führt dazu, dass die Regelabweichung am Ausgang dieses ersten PI-Regler 534 bei der Summierstelle 536 einen bleibenden Wert behalten kann, selbst wenn kein Regelfehler eingangs mehr vorhanden ist, also selbst dann, wenn die Regelabweichung des Gesamtladezustands Ce null ist.

Hier liegt der Gedanke zugrunde, dass durch diesen ersten PI-Regler 534 ein aufzuschaltender Korrekturwert bestimmt wird, der nämlich zu der vorzugebenen Energiemenge E', die sich allein aus dem Vergleich zwischen Anfangs- und Endladezustand ergeben hat, zur Korrektur aufaddiert wird. Es ist anzunehmen, dass in der Ladeinfrastruktur Verlustleistungen auftreten, sodass grundsätzlich immer mehr Energie benötigt wird, als sich rechnerisch allein aus dem Vergleich zwischen Anfangs- und Endladezustand ergibt. Diese Energiedifferenz soll somit dauerhaft aufgeschaltet werden. Es können aber auch andere Fehler berücksichtigt werden, die sich besonders auch auf der Abschätzung zu dem Anfangsladezustand CMₛₜₐᵣₜ ergeben können. Das System wird somit lernfähig, ermittelt Abweichungen und behält diese auch.

Besonders unter der Berücksichtigung, dass die Abschätzung des Anfangsladezustands CMₛₜₐᵣₜ auch auf Wahrscheinlichkeitsüberlegungen beruht und daher auch eine statistisch bedingte Schwankung aufweisen kann, ist zusätzlich ein erstes Verzögerungsglied erster Ordnung 538 vorgesehen. Das Ergebnis ist ein erster Energiekorrekturwert EK1 der über die Summierstelle 540 und die weitere Summierstelle 528 als Energiekorrekturwert aufgeschaltet werden kann.

An der Summierstelle 540 kann zudem ein zweiter Energiekorrektur EK2 berücksichtigt werden.

Der zweite Energiekorrekturwert EK2 basiert auf einer Regelabweichung der Gesamtleistung. Die Bestimmung dieser Gesamtleistung Pe ist in Figur 4 gezeigt und beschrieben und bildet hier eine Eingangsgröße des Vorgabeblocks 402. Dieser Regelfehler der Gesamtleistung Pe wird über den Integrator 542 gegeben, sodass sich ein Regelfehler der Energie EPe ergibt, der hier aber auf der Leistungsmessung oder zumindest Leistungserfassung der Einzelleistungen beruht, statt der Erfassung der einzelnen Ladezustände.

Ansonsten wird aber auch hier vorgeschlagen, diesen Regelfehler der Energie EPe über einen PI-Regler zu geben, nämlich den zweiten PI-Regler 544, der an seinem Ausgang, nämlich an der Summierstelle 546 zu einem bleibenden Korrekturwert führen kann. Auch hier ist aus oben genannten Gründen noch ein zweites Verzögerungsglied erster Ordnung 548 vorgesehen, das einen zweiten Energiekorrekturwert EK2 ausgibt. Dieser zweite Energiekorrekturwert EK2 wird somit zu dem ersten Energiekorrektur EK1 an der Summierstelle 540 aufaddiert und es ergibt sich ein gemeinsamer Energiekorrekturwert EK, der an der Summierstelle 528 auf die berechnete Energie E' aufaddiert wird, um die vorzugebende Energiemenge E zu erhalten.

Die Struktur der Figur 5 ist ein Beispiel für eine Ausführungsform und kann grundsätzlich auch so eingesetzt werden. Insbesondere kommt tatsächlich in Betracht, dass die beiden Energiekorrekturwerte EK1 und EK2 gemeinsam bestimmt und aufaddiert werden. Es kommt aber auch in Betracht, dass nur eine der beiden Berechnungen durchgeführt wird. Da beide Korrekturwerte durch einen PI-Regler bestimmt werden, führen die jeweils aktiven PI-Regler dazu, dass die entsprechende Regelabweichung ausgeregelt wird.

Um ein potenzielles Gegeneinanderwirken dieser beiden Regler zu vermeiden, kann einer der beiden Regler deaktiviert werden. Grundsätzlich zu bevorzugen ist der Regler, der basierend auf der Regelabweichung des Gesamtladezustands CE den Korrekturwert ermittelt, denn letztlich soll ein gewünschter Gesamtladezustand erreicht werden. Die übrigen Werte sind im Wesentlichen Mittel zum Zweck dafür. Aber besonders dann, wenn ein Ladezustand schlecht gemessen werden kann, kann auch die Berücksichtigung des Regelfehlers der Leistung in Betracht kommen.

Es ist nochmals zu betonen, besonders mit Hinweis auf den Zeitblock 530, dass besonders das Bestimmen der Energiekorrekturwerte EK1 und EK2 bzw. EK besonders für einen wiederkehrenden Prozess vorgesehen ist. Die Energievorgabe wird für einen Steuerzeitraum, also einen Aufladezyklus der Ladeinfrastruktur vorgegeben. Darauf basierend wird der Austauschleistungsverlauf für diesen Steuerzeitraum vorgegeben und dann, wenn die Zeit gekommen ist und dieser Steuerzeitraum beginnt und durchfahren wird, soll eine entsprechende Austauschleistung gemäß dem Austauchleistungsverlauf bereitgestellt werden.

Die Elektrospeicher werden dann geladen und am Ende des Steuerzeitraums stellt sich heraus, ob sich der Gesamtladezustand wie gewünscht eingestellt hat, oder ob Abweichungen vorhanden sind. Sind Abweichungen vorhanden, liegt also insbesondere eine Regelabweichung des Gesamtladezustands Ce vor, hat dies Auswirkungen auf die Energievorgabe für den nächsten oder einen weiteren Steuerzeitraum. Somit wird also eine Regelschleife erneu durchlaufen.

Vereinfacht ausgedrückt wird eine Energievorgabe im Voraus für eine Nacht bestimmt und für diese Nacht der Austauschleistungsverlauf ebenfalls im Voraus berechnet. Sobald diese Nach anbricht, was auch über 24h nach der Vorausberechnung sein kann, wird diese Vorausberechnung in der Nacht umgesetzt. Am nächsten Morgen wird überprüft, wie gut dieser Vorgang funktioniert hat. Es kann dann die nächste, oder die übernächste Nacht die Verbesserung wirksam werden, die aus der Abweichung dieser letzten Nacht abgeleitet wurde.

Da ein Austauschleistungsverlauf regelmäßig 24 Stunden vorher geplant werden soll, damit der Netzbetreiber sich darauf einstellen kann, erfolgt eine Planung regelmäßig am Ende einer Nacht nicht für die nächste, sondern für die übernächste Nacht. Das braucht an der Regelungsstruktur, besonders wie sie in Figur 5 gezeigt und erläutert ist, aber nichts zu ändern, denn es kann trotzdem im Tagesrhythmus eine neue Energievorgabe ausgegeben werden, auch wenn diese erst über einen Tag später wirksam wird. Allenfalls könnte in Betracht kommen, die Korrekturdynamik anzupassen, also die Dimensionierung des ersten bzw. zweiten PI-Reglers 534 bzw. 544 entsprechend einzustellen, als auch die Dynamik des ersten bzw. zweiten Verzögerungsgliedes erster Ordnung 538 bzw. 548 entsprechend einzustellen.

Nur der Einfachheit halber sind für die Integratoren der beiden PI-Regler 534 bzw. 544 und auch die Integratoren der beiden Verzögerungsglieder erster Ordnung 538 und 548 keine Verstärkungswerte bzw. Integrationszeitkonstanten gezeigt. Die sind aber nur der Einfachheit halber nicht gezeigt und sind natürlich vorzusehen und können für die Einstellung der Dynamik dienen.

Eine Möglichkeit der Dimensionierung besteht darin, dass die PI-Regler jeweils so dimensioniert werden, dass sie nach 10 Zyklen bei einem Eingangssprung diesen Wert an ihrem Ausgang erreichen. Als Zeitkonstante könnten also 10 Tage vorgesehen sein.

Es ist aber zu wiederholen, dass die Regelungsstruktur der Figur 5 der Veranschaulichung dient. Die Integratoren in dem Vorgabeblock der Figur 5, besonders von den PI-Reglern und den Verzögerungsgliedern können aber auch diskret ausgeführt sein. Die Zeitkonstante wäre dann so zu wählen, dass nach 10 Zyklen bei einem Eingangssprung der Endwert erreicht wird, was den PI-Regler anbelangt, bzw. 63% des Eingangssprungs erreicht werden, was jeweils die Verzögerungsglieder erster Ordnung anbelangt. Die Proportionalitätsfaktoren K1 bzw. K2 können beispielsweise den Wert 0,5 aufweisen. Werden beide Regler zugleich verwendet, wie das in der Figur dargestellt ist, können die Verstärkungsfaktoren halbiert und die Zeitkonstanten verdoppelt verwendet.

Figur 6 zeigt einen ersten Teil des Verteilungsblocks 406 der Figur 4. Die Verteilung auf die Einzelleistungen nebst Anpassungsmöglichkeiten wird in Figur 7 beschrieben. Die Darstellung in Figur 6 betrachtet somit nur den Teil, der als Eingangswerte den Austauschleistungsverlauf PS(t), die erfasste Summenleistung PM und die Regelabweichung des Gesamtladezustands Ce erhält.

Grundsätzlich ist die Austauschleistung gemäß dem Austauschleistungsverlauf PS(t) zu verteilen und somit wie in Figur 7 erläutert wird auf die einzelnen Teilaustauschleistungen zu verteilen. In Abhängigkeit von der erfassten Summenleistung PM als auch der Regelabweichung der Gesamtladezustände Ce kann aber eine Korrektur vorgesehen und an der Summierstelle 602 aufgeschaltet werden. Es ergibt sich dann der modifizierte Austauschleistungsverlauf PS'(t). Als Korrektur sind zwei Varianten in Figur 6 beschrieben, die auch wie dargestellt zusammen angewendet werden können, es kommt aber auch in Betracht, nur eine zu berücksichtigen bzw. zu verwenden.

Bei Berücksichtigung der aufgenommenen Summenleistung PM wird eine Differenz zum aufgenommenen Austauschleistungsverlauf PS(t) an der Summierstelle 604 gebildet. Das Ergebnis ist eine Regelabweichung bezogen auf die Leistung PMe. Dieser Regelfehler ist somit eine Leistungsabweichung und die wird über den Integrator 606 in eine Abweichungsenergie, also einen Regelfehler der Energie EMe umgerechnet. Dieser Regelfehler der Energie wird über einen Dimensionierungsblock 608 in einen Korrekturwert PMK umgerechnet und über die Summierstelle 610 dann über die weitere Summierstelle 602 auf den vorgegebenen Austauschleistungsverlauf PS(t) aufgeschaltet. An der Summierstelle 610 kann eine weitere Korrektur hinzukommen.

Im Grunde wird durch den Integrator 606 für die Regelabweichung ein Regler mit Integralanteil geschaffen. Der Dimensionierungsblock 608 kann als Verstärkung bzw. auch als Integrationszeitkonstante angesehen werden. Damit wird hier auch erreicht, dass ein Regelfehler, der beispielsweise eine Verlustleistung widerspiegelt, dauerhaft zu einem aufgeschalteten Korrekturwert führt, auch dann, wenn der Regelfehler bereits ausgeregelt wurde.

Zudem hat diese Art der Vorgehensweise aber auch eine technische Bedeutung, nämlich, dass die Regelabweichung zwischen vorgegebener und aufgetretener Leistung über den Integrator 606 in einen Energiewert umgerechnet wird. Dabei ist auch zu berücksichtigen, dass bei der Planung Energie relevant ist, denn eine beschaffte Energie wird letztlich bezahlt. Hier wird also eine Energiefehlmenge bestimmt und ausgeregelt. Der Dimensionierungsblock 608 dimensioniert dabei natürlich die eingangsseitige physikalische Größe von Energie in die ausgangsseitige physikalische Größe von Leistung. Es kommt aber auch eine Berücksichtigung der Regelungsdynamik hinzu, denn je nach Wahl des Wertes in dem Dimensionierungsblock 608 wird der Energiefehlbetrag schneller oder langsamer ausgeregelt.

Eine weitere Korrekturmöglichkeit besteht darin, die Regelabweichung des Gesamtladezustands Ce zu verwenden. Sie wird dazu über den Dimensionierungsblock 612 in den Leistungswert PCe umgerechnet, der eine Leistungsabweichung PCe einer Ladezustandsabweichung zuordnet. Dieser Wert kann auch als ein Korrekturwert angesehen werden, der über die Summierstelle 610 und die Summierstelle 602 auf den Austauschleistungsverlauf aufgeschaltet werden kann. Der Dimensionierungsblock 612 rechnet ebenfalls, wie der Block 608, die Dimension eines Ladezustands in die Dimension einer Leistung um.

Auch hier muss zusätzlich eine Dimensionierung vorgesehen sein, über die eingestellt wird, welcher Leistungskorrekturwert welcher Regelabweichung des Gesamtladezustands entsprechen soll. Eine Möglichkeit der Dimensionierung besteht darin, einen Quotient zu bilden, zwischen maximal eingebbarer Leistung und maximaler Spanne der Ladezustände. Die maximal eingebbare Leistung ist begrenzt und wurde auch schon in dem Planungsblock 404 berücksichtigt. Die maximale Ladespanne ist im Grunde der Wert zwischen maximalen Gesamtladezustand und minimalem Gesamtladezustand. Hier könnten auch die Werte Cₘₐₓ und Cₘᵢₙ verwendet werden, die in den Vorgabeblock eingegeben werden, wie Figur 5 erläutert.

Wenn der Ladezustand und damit auch die Regelabweichung des Gesamtladezustands als Energieinhalt berücksichtigt würde, so könnten die Faktoren des Dimensionierungsblocks 608 und des Dimensionierungsblocks 612 identisch sein und den genannten Quotienten zwischen maximaler Leistung und maximaler Ladespanne entsprechen. Sofern die Ladezustände in Prozent gegeben werden und somit auch die Regelabweichung des Gesamtladezustands in Prozent angegeben wird, müsste dies natürlich zusätzlich in dem Dimensionierungsblock 612 berücksichtigt, also herausgerechnet werden.

Zu der Leistungsabweichung aus dem Gesamtladezustand Ce wird zudem vorgeschlagen, was auch in Figur 7 noch weiter erläutert wird, ihn zur Korrektur einer Leistungsanforderung zu berücksichtigen. Dazu kann dieser Wert beispielsweise in den Planungsblock 404 eingegeben werden, wie es in Figur 4 gestrichelt angedeutet ist. Für den Korrekturwert PMk ist das zwar grundsätzlich auch möglich, hier aus folgendem Grund aber nicht vorgesehen.

Die Berücksichtigung der Leistungsabweichung PMe bedeutet, dass die Elektrofahrzeuge tatsächlich in Summe nicht die Leistung anfordern, die gemäß dem Austauschleistungsverlauf vorgesehen sind. Diese Abweichung soll durch den Korrekturwert PMk korrigiert werden. In Annahme, dass diese Korrektur auch erfolgreich ist, bedeutet das, dass danach, also mit der Korrektur, die Summe der Leistungen die die Elektrospeicher aufnehmen, dem jeweiligen Leistungswert gemäß den vorgegebenen Austauschleistungsverlauf entsprechen. Daher oder besser gesagt deswegen braucht keine geänderte Leistungsanforderung durchgeführt zu werden.

Bei dem Korrekturwert basierend auf der Regelabweichung des Gesamtladezustands PCe liegt die Abweichung aber nicht in der tatsächlichen aufgenommenen Leistung, sondern in dem erzielten Resultat. Idealerweise wird zwar genau die Leistung von der Summe der Leistungen PM zwischen Ladeinfrastruktur und elektrischem Versorgungsnetz ausgetauscht, das gewünschte Ziel wird aber nicht erreicht. Beispielsweise bleibt der Gesamtladezustand hinter dem vorausgesagten Gesamtladezustand zurück. Das bedeutet, dass tatsächlich zu wenig Austauschleistung angefordert wurde, um das angestrebte Ladeziel zu erreichen.

Die Werte des Austauschleistungsverlaufs sind in dem Moment also zu niedrig, um bei dem Beispiel zu bleiben. Sie könnten natürlich auch zu hoch sein. Wenn dies ausgeregelt wird, bedeutet das, dass danach also mit dieser Korrektur, bewusst nicht mehr die Leistung angefordert oder abgerufen wird, die ursprünglich gemäß des Austauschleistungsverlaufes vorgesehen war. In diesem Fall müsste also mehr oder weniger Leistung als ursprünglich vorgesehen angefordert werden. Deshalb ist vorgesehen, die Leistungsabweichung auf den Gesamtladezustand PCe entsprechend weiter zu berücksichtigen. Sie könnte unmittelbar an den Planungsblock 404 übergeben werden, aber sie kann auch mit einer weiteren Leistungsdiskrepanz zusammen berücksichtigt werden, wie noch in Figur 7 erläutert wird.

Im Übrigen ist noch auf das folgende allgemein hinzuweisen. Die Zeitvariable t bedeutet für den Austauschleistungsverlauf PS(t) als auch für die Energievorgabe E(t) aber auch den Ladezustandsverlauf CS(t), und im Übrigen auch für einige Abwandlungen dazu, eine Zeitabhängigkeit an. Hier soll besonders herausgestellt werden, dass hier Zeitverläufe vorgegeben werden. Viele andere Variablen, wie beispielsweise der Gesamtleistungsverlauf PM oder die Regelabweichung des Gesamtladezustands Ce und auch diverse andere Größen in allen Figuren 4 - 7 sind aber meist ebenfalls zeitabhängig. Das wird lediglich deswegen nicht dort in Klammern angedeutet, weil es sich nicht um die Vorgabe eines gesamten Zeitverlaufs handelt.

In Figur 7 wird die Aufteilung des Austauschleistungsverlaufs, der die Gesamtleistung betrifft, auf die einzelnen Teilaustauschleistungen PS1(t) - PSn(t) erläutert, einschließlich einer Variante zum Ausregeln von Abweichungen.

Die zentrale Eingangsgröße bildet hierbei der modifizierte Austauschleistungsverlauf PS'(t), der einen Korrekturwert enthalten kann, wie dies in Figur 6 erläutert ist. Vereinfacht ausgedrückt erhält die Figur 7 den Wert der Figur 6 als Eingangsgröße.

Zunächst wird dieser modifizierte Austauschleistungsverlauf PS'(t) durch entsprechende Anteilsfaktoren F1 - Fn aufgeteilt. Zur Berücksichtigung werden anschaulich Anteilsblöcke 721 - 722 vorgesehen, die diese Faktoren enthalten. Im einfachsten Fall, wenn alle angeschlossenen Elektrospeicher gleich dimensioniert sind, können alle Faktoren gleich sein und den Wert 1/n aufweisen. Die vorhandenen Faktoren können aber auch veränderlich sein und beispielsweise berücksichtigen, wenn ein Elektrofahrzeug noch nicht angeschlossen ist.

So kann beispielsweise bei drei gleichen Elektrofahrzeugen der Faktor jeweils 1/3 betragen. Ist aber, temporär, ein Elektrofahrzeug nicht angeschlossen, so beträgt sein Faktor den Wert 0, während die verbleibenden Faktoren den Wert ½ betragen. Es kann sein, dass das Elektrofahrzeug nur temporär nicht angeschlossen ist, weil es zu spät also erst nach Beginn des Startzeitraums, zur Ladeinfrastruktur zurückgekehrt ist. Dann kann der Ladevorgang zunächst mit den beiden Elektrofahrzeugen und jeweils dem Faktor 0,5 beginnen, und sobald das dritte Elektrofahrzeug angeschlossen ist, werden dann alle Faktoren auf 1/3 gesetzt. Die nachfolgende Erläuterung geht auf diese Variante aber nicht weiter ein und geht im Grunde davon aus, dass durchgängig dieselben Elektrofahrzeuge angeschlossen sind.

Es ergeben sich also durch die Aufteilung vorläufige Teilaustauschleistungen PS'1 - PS'n. Diese sollen zum Laden des jeweiligen Elektrofahrzeugs also des jeweiligen Elektrospeichers verwendet werden. Der Verlauf des sich idealerweise ergebenden Ladezustands lässt sich daraus berechnen, nämlich zunächst durch Integration mit dem Integrator 724, der zu einem Teilenergieverlauf ES1 führt.

Über den Dimensionierungsblock 726 ergibt sich ein Teilladeverlauf CS1. Das ist somit der berechnete Teilladeverlauf, der mit dem erfassten Teilladeverlauf CM1 verglichen wird, nämlich in der Summierstelle 728. Das Ergebnis ist eine Teilladeabweichung Ce1. Über einen Dimensionierungsblock 730 wird diese in einen Leistungskorrekturwert Pk1 umgerechnet und an der Summierstelle 734 auf die vorläufige Teilaustauschleistung PS'1 aufgeschaltet. Es ergibt sich die nicht mehr vorläufige Teilaustauschleistung PS1(t). Diese bildet einen Ausgang des Verteilungsblocks 406 und kann an dem Terminalblock als einzustellende Teilaustauschleistung gegeben werden.

Dieser Leistungskorrekturwert Pk1 wird außerdem über den Begrenzer 732 gegeben, um zu prüfen, in wie weit Begrenzungen eingehalten werden. Das Ergebnis ist dann der begrenzte Teilleistungskorrekturwert Pk1'. Sofern Grenzen nicht überschritten werden, ist der Teilleistungskorrekturwert Pk1 mit dem begrenzten Teilleistungskorrekturwert Pk1' identisch. Andernfalls ist der Teilleistungskorrekturwert Pk1 dem Betrage nach größer als der begrenzte Teilleistungskorrekturwert Pk1'. Die weitere Berücksichtigung dieser Begrenzung wird unten noch beschrieben.

Jedenfalls wird auf die beschriebene Art und Weise für jede Teilaustauschleistung bis hin zur Teilaustauschleistung aus PSn(t) vorgegangen. Dazu ist ein entsprechender zweiter Strang in Figur 7 gezeigt und die insoweit gleichen, zumindest übereinstimmenden Blöcke sind mit ähnlichen Bezugszeichen aber mit Apostroph gekennzeichnet. Besonders in den Dimensionierungsblöcken 726 und 730 im Vergleich zu 726' und 730' können aber unterschiedliche Faktoren vorhanden sein, besonders dann, wenn nicht gleiche Elektrofahrzeuge mit gleichen Elektrospeichern geladen werden.

Auch der Begrenzer 732 bzw. 732' kann dann unterschiedlich gestaltet sein.

Das Aufschalten der Teilleistungskorrektur Pk1 bzw. Pkn führt zunächst dazu, dass die jeweilige Teilaustauschleistung verändert wird und damit auch die vorgegebene Gesamtaustauschleistung gemäß dem Austauschleistungsverlauf nicht mehr eingehalten werden kann. Um das zu vermeiden, wird vorgeschlagen, sämtliche begrenzte Teilleistungskorrekturwerte Pk1' - Pkn' auf einen Summierblock 740 zu geben und zu der Leistungskorrektur Pk aufzusummieren. Diese Leistungskorrekturwerte, also die Summe aller begrenzten Teilleistungskorrekturen, werden dann an der Summierstelle 742 als Leistungskorrekturwert Pk von dem modifizierten Austauschleistungsverlauf PS'(t) abgezogen.

Diese Aufschaltung an der Summierstelle 742 hat zunächst den unmittelbaren Effekt, dass der vorgegebene modifizierte Austauschleistungsverlauf PS'(t), um die durch die Korrektur aufgeschaltete Leistung wieder reduziert wird. Durch die Korrektur würde die Leistungsvorgabe nicht mehr eingehalten werden können, was hierdurch wieder rückgängig gemacht wird. Es scheint aber auch die Korrektur wieder zunichte zu machen.

Die gezeigte Regelung entfaltet dennoch Wirkung, nämlich besonders dann, wenn unterschiedlich große Teilleistungskorrekturwerte ermittelt und aufgeschaltet werden. Es lässt sich an folgendem vereinfachtem Beispiel erläutern.

Sind nur zwei zu ladende Elektrofahrzeuge vorhanden und ergibt sich bei der Korrektur für die erste Teilaustauschleistung PS1(t) ein Korrekturwert, zum Beispiel von 2kW, während bei der anderen Teilaustauschleistung PS2(t) kein Korrekturwert berechnet wird, so führt dies an dem Summierblock 740 zu dem Korrekturwert Pk von 2kW. Dies wird an der Summierstelle 742 wieder abgezogen. Bei gleicher Aufteilung über die Anteilsblöcke 721, 722 führt das zu einer Verringerung der einzustellenden Leistung PS'1 und PSn' von je einem kW. Das Ergebnis ist somit, dass, in diesem ersten gedanklichen Schritt, die Leistungskorrektur für das erste Elektrofahrzeug für 2 kW zwar auch reduziert wurde, aber auch zu einem Teil auf das zweite Fahrzeug übertragen wurde. Nach diesem ersten Schritt würde also die reduzierte Korrekturleistung von 1 kW für das erste Elektrofahrzeug von dem zweiten Elektrofahrzeug übernommen werden. Das erste Elektrofahrzeug erhält also 1 kW mehr, während das zweite Elektrofahrzeug 1 kW weniger erhält.

Gemäß der dynamischen Struktur der in Figur 7 gezeigten Regelung würde die Anpassung natürlich fortschreiten und bei dem genannten Beispiel würden sich die anschaulich genannten werte weiter verändern.

Es ist nun auch eine Begrenzung zu berücksichtigen. Ist der berechnete vorläufige Teilleistungskorrekturwert Pk'1 innerhalb einer Begrenzung würde zunächst der vorstehend beschriebene Ablauf von statten gehen. Wird aber eine Grenze erreicht, sei es anfangs oder erst später bei weiterem Nachregelvorgang, so ergibt sich ein Unterschied zwischen dem aufgeschalteten Teilleistungskorrekturwert Pk1 und dem begrenzten Teilleistungskorrekturwert Pk1'.

Diese Differenz wird in der Summierstelle 736 berücksichtigt. Und es ergibt sich eine erste Korrekturabweichung dPk1. Diese erste Korrekturabweichung bis hin zur n-ten Korrekturabweichung, falls solche vorhanden sind, können dann in dem Summierblock 744 aufaddiert werden und ergeben die Gesamtkorrekturabweichung dPk.

Diese Gesamtkorrekturabweichung dPk ist somit eine Leistungsabweichung, um die die Summenleistung PM von der vorgegebenen Austauschleistung also der Gesamtaustauschleistung die als Austauschleistungsverlauf PS(t) vorgegeben wurde, abweicht. Diese Leistung müsste, genauso wie die Leistungsabweichung PCe aus dem Gesamtladezustand als zusätzliche Leistung angefordert werden. Dazu wird die Summe dieser beiden Werte, die sich an der Summierstelle 746 ergibt, als Leistungsabweichung abgegeben.

Diese Leistungsabweichung dP ist auch in der Figur 4 gezeigt und falls möglich kann versucht werden, ohne eine Zusatzanforderung von Leistung auszukommen, indem der gesteuerte Verbraucher bzw. die gesteuerte Last 408 seine Leistungsaufnahme bzw. -abgabe entsprechend anpasst.

Die Struktur der Figur 7 ist ein praktisches Ausführungsbeispiel, bei dem ein erster Ausgleich vorgenommen werden kann, bei dem für geringe Abweichungen zunächst ein Ausgleich zwischen den Elektrospeichern durchgeführt wird. Diese Art der Regelungsstruktur entfaltet besonders dann sehr gute Wirkung, wenn von sehr vielen Elektrospeichern nur ein einziger zu einem Korrekturwert führt, der dann gleichmäßig auf alle Elektrospeicher umgelegt werden kann, wodurch diese nur minimal in ihrer Leistungsaufnahme angepasst werden müssen. Besonders dann, wenn zusätzlich ein Schwellwert vorgesehen wird, ab dem überhaupt erst ein Korrekturwert berechnet wird, könnte eine solche Umverteilung dazu führen, dass die übrigen Elektrospeicher nicht ihrerseits mit einem Korrekturwert gegensteuern.

Aber auch bei gleicher Abweichung aller Elektrospeicher würde sich eine Wirkung entfalten, weil nämlich das negative Aufschalten des Leistungskorrekturwertes für die Summenleistung PK bei allen Teilaustauschleistungen zu einer zunehmenden Fehlerkorrektur führen würde, bis jeweils die Begrenzung erreicht wird. Dann steigen die Korrekturabweichungen und auch die Gesamtkorrekturabweichung dPk und würden entweder zu einer geänderten Leistungsvorgabe führen, oder zu einer Auslagerung an einen steuerbaren Verbraucher bzw. die gesteuerte Last 408.

Ergänzend zu der gezeigten Struktur in Figur 7 kommt beispielsweise auch in Betracht, dass bei dauerhaft erkannten Abweichungen, also zum Beispiel abhängig von dem jeweiligen Teilleistungskorrekturwert Pk1 - Pkn die Anteilsblöcke 721 - 722 bzw. die Anteilsfaktoren F1 - Fn angepasst werden können.

Auch die Übernahme von Korrekturleistung zwischen den jeweiligen Teilaustauschleistungen kann zusätzlich oder alternativ zu der in Figur 7 gezeigten Regelungsstruktur beispielsweise durch entsprechende Auswertelogiken erfolgen. Zusätzlich oder anstatt der gezeigten Regelungsstruktur kann ein Ausregeln und Korrigieren auch mittels einer Auswertelogik durchgeführt werden.

Besonders wurde erkannt, dass vielfältige Begrenzungen der Austauschleistung und besonders der Teilleistungen der Leistungseinheiten vorliegen können.

Für einzelne Speicher bzw. einzelne Ladeterminals, die auch als Ladepunkte bezeichnet werden können, wird die Austauschleistung durch die aktuell mögliche Leistung des Ladepunktes in Laderichtung und Entladerichtung bestimmt, nämlich durch die aktuell mögliche Austauschleistung der Batterie und durch den Punkt in der Ladekurve. Häufig sind die Leistungen aber diskrete Werte bzw. eindeutige Wert ohne Variationsmöglichkeit, oder es ergeben sich Bänder bzw. Variationsmöglichkeiten. Einige Beispiele:
Kann der Ziel-Ladezustand (Ziel-SoC) nur noch erreicht werden, wenn mit maximaler Leistung geladen wird, ist die mögliche Austauschleistung genau der Wert der maximalen Ladeleistung

Ist der Speicher, der auch als Akku bezeichnet werden kann, z.B. halb geladen und der Ladezeitraum ist noch lang (z.B. das dreifache der Zeit, welche benötigt wird, um den Akku bei voller Ladeleistung auf 100 % zu laden), dann entspricht die mögliche Austauschleistung dem Band der maximalen Ladeleistung und der maximalen Rückspeiseleistung. Ein solches Band bzw. ein solcher Variationsbereich kann aber für Laden und Entladen unterschiedliche Grenzen haben und bspw. zwischen +350 kW und -50 kW liegen, wenn die Bidirektionalität eine asymmetrische Leistung hat.

Nähert sich der Akku 90 % Ladezustand, der auch als SoC bezeichnet werden kann, sinkt die maximale Ladeleistung kontinuierlich ab

Ist der Akku sehr kalt oder warm, ist der mögliche Leistungsaustausch auch eingeschränkt.

Innerhalb eines Aggregats, also bei gemeinsamer Betrachtung mehrerer Speicher, insbesondere bei Betrachtung aller angeschlossener Speicher der Ladeinfrastruktur, ist das noch komplizierter, was erfindungsgemäß erkannt wurde. Ein gemeinsames SoC, also besonders der Gesamtladezustand des Aggregates kann durchaus sehr unterschiedliche mögliche Austauschleistungen enthalten. Beispiele:
50 % gesamt SoC, besonderes Gesamtladzustand, kann folgende Varianten bedeuten:
- Maximale Lade- und Entladeleistung, wenn alle Akkus bei 50 % sind
- Halbe Ladeleistung und halbe Entladeleistung, wenn die Hälfte der Einzelladezustände bei 100 % sind und die andere Hälfte bei 0 % sind
- 70 % Ladeleistung und auch 70 % Entladeleistung, wenn die Hälfte bei 90 % sind und die andere Hälfte bei 10 %, wenn eine symmetrische Aufteilung vorliegt. Es kommt bei dem Beispiel für eine asymmetrische Aufteilung aber auch in Betracht, dass 70 % Ladeleistung und 100 % Entladeleistung vorliegen.

Im Aggregat spielen natürlich auch noch die gerade verbundenen Einheiten eine Rolle, also die Berücksichtigung, dass Leistungseinheiten verbunden werden, wodurch der verfügbare Leistungsbereich verändert wird. Der Leistungsbereich spannt sich dann immer weiter auf oder ab, wenn Leistungseinheiten verbunden bzw. getrennt werden.

Auch die Auslastung der Ladeinfrastruktur spielt eine Rolle. Gerade wenn Ladeleistung variabel auf Ladepunkte verteilt werden kann, kann die Auslastung der Ladeinfrastruktur eine Rolle spielen.

Auch wenn gerade innerhalb einer Ladeinfrastruktur "umgeladen" wird, Leistung also von einem Akku in einen anderen übertragen wird, sinkt die nach außen mögliche Gesamtleistung.

## Patentansprüche

1. Verfahren zum Steuern einer Austauschleistung zwischen einer Ladeinfrastruktur und einem elektrischen Versorgungsnetz, wobei
- mehrere Leistungseinheiten zum Abgeben oder Aufnehmen elektrischer Leistung an die Ladeinfrastruktur anschließbar sind, um elektrische Leistung zwischen den Leistungseinheiten und dem elektrischen Versorgungsnetz über die Ladeinfrastruktur auszutauschen, und
- mehrere der Leistungseinheiten jeweils als Elektrofahrzeug (351-355) ausgebildet sind, sodass mehrere Elektrofahrzeuge jeweils an die Ladeinfrastruktur anschließbar sind, um elektrische Leistung zwischen den Elektrofahrzeugen und dem elektrischen Versorgungsnetz über die Ladeinfrastruktur auszutauschen und die Elektrofahrzeuge dadurch zu laden oder zu entladen,
umfassend die Schritte
- Bestimmen einer Energievorgabe für einen Steuerzeitraum, die wenigstens die Energiemenge vorgibt, die die Ladeinfrastruktur in dem Steuerzeitraum aus dem elektrischen Versorgungsnetz beziehen soll,
- Vorgeben einer Leistungsbegrenzung, die wenigstens eine Grenze für die Austauschleistung angibt, die von der Ladeinfrastruktur bereitgestellt werden kann,
- Vorgeben eines Austauschleistungsverlaufs (P(t)) in Abhängigkeit von
- der Energievorgabe (E(t)) und
- der Leistungsbegrenzung, wobei
- der Austauschleistungsverlauf für die Ladeinfrastruktur einen zeitlichen Verlauf der Austauschleistung für den Steuerzeitraum vorgibt,
- Bestimmen von Teilaustauschleistungen für die Leistungseinheiten, die jeweils von der Leistungseinheit bereitzustellen ist, wobei
- die Summe der Teilaustauschleistungen der Austauschleistung im Wesentlichen entspricht,
- das Bestimmen der Teilaustauschleistungen in Abhängigkeit von Ladezuständen der Leistungseinheiten erfolgt und
- das Bestimmen der Teilaustauschleistungen unter Berücksichtigung von Teilleistungsgrenzen der Leistungseinheiten erfolgt, und
- Bereitstellen der Teilaustauschleistungen durch die Leistungseinheiten, um dadurch die Austauschleistung zwischen der Ladeinfrastruktur und dem elektrischen Versorgungsnetz bereitzustellen.

2. Verfahren nach Anspruch 1, **dadurch gekennzeichnet, dass**
- die Teilleistungsgrenzen variabel sind und in Abhängigkeit von Ladezuständen der jeweiligen Leistungseinheiten bestimmt werden und/oder
- die Teilaustauschleistungen als Teilleistungsverläufe (Pi(t)) in Abhängigkeit von dem Austauschleistungsverlauf, vorgegeben werden, wobei
- aus den Ladezuständen der Leistungseinheiten, soweit sie an die Ladeinfrastruktur angeschlossen sind, ein Gesamtladezustand bestimmbar ist,
- für den Gesamtladezustand ein zeitlicher Verlauf eines Ladezustandsbereichs als Flexibilitätsbereich vorgegeben wird, wobei der Flexibilitätsbereich durch einen zeitlichen Verlauf einer Obergrenze des Gesamtladezustands und einen zeitlichen Verlauf einer Untergrenze des Gesamtladezustands für den Steuerzeitraum aufgespannt wird,
und
- das Bestimmen der Energievorgabe oder das Vorgeben des Austauschleistungsverlaufs (P(t)) in Abhängigkeit von dem Flexibilitätsbereich erfolgt, und/oder
- der Steuerzeitraum an einem Zielzeitpunkt endet und die Obergrenze des Gesamtladezustands am Zielzeitpunkt größer ist als die Untergrenze des Gesamtladezustands.

3. Verfahren nach Anspruch 1 oder 2, **dadurch gekennzeichnet, dass**
- das Bestimmen der Teilaustauschleistungen jeweils in Abhängigkeit von einer Abweichung des Ladezustands der jeweiligen Leistungseinheit von einem relativen mittleren Ladezustand erfolgt, wobei
- das Bestimmen so erfolgt, dass der jeweilige Ladezustand dem mittleren Ladezustand angeglichen wird.

4. Verfahren nach einem der vorstehenden Ansprüche, **dadurch gekennzeichnet, dass**
- eine positive Teilaustauschleistung, mit der die Leistungseinheit geladen wird, in Abhängigkeit von einer Differenz des Ladezustandes von einem zu erreichenden Ladezustand, insbesondere vollgeladenem Ladezustand bestimmt wird, und
- eine negative Teilaustauschleistung, mit der die Leistungseinheit entladen wird, in Abhängigkeit von einer Differenz des Ladezustandes von einem entladenen Ladezustand, bestimmt wird, und/oder
- bei Vorgabe einer positiven Austauschleistung, bei der Leistung aus dem elektrischen Versorgungsnetz zum Laden der Leistungseinheiten entnommen wird, Leistungseinheiten, die einen Ladezustand unterhalb eines bzw. des relativen mittleren Ladezustands aufweisen, vorrangig und/oder stärker geladen werden, als Leistungseinheiten, die einen Ladezustand oberhalb des relativen mittleren Ladezustands aufweisen, und
- bei Vorgabe einer negativen Austauschleistung, bei der Leistung in das elektrische Versorgungsnetz zum Entladen der Leistungseinheiten eingespeist wird, Leistungseinheiten, die einen Ladezustand oberhalb des relativen mittleren Ladezustands aufweisen, vorrangig und/oder stärker entladen werden, als Leistungseinheiten, die einen Ladezustand unterhalb des relativen mittleren Ladezustands aufweisen.

5. Verfahren nach einem der vorstehenden Ansprüche, **dadurch gekennzeichnet, dass**
- in Abhängigkeit von dem Austauschleistungsverlauf
- gespeicherte Energie aus Leistungseinheiten mit einem Ladezustand oberhalb eines bzw. des relativen mittleren Ladezustands in Leistungseinheiten mit einem Ladezustand unterhalb des relativen mittleren Ladezustands umgeladen werden.

6. Verfahren nach einem der vorstehenden Ansprüche, **dadurch gekennzeichnet, dass**
- ein Leistungsbedarf des elektrischen Versorgungsnetzes als Netzleistungsbedarf für den Steuerzeitraum ermittelt wird, und
- das Bestimmen des Austauschleistungsverlaufs in Abhängigkeit von dem Netzleistungsbedarf erfolgt, wobei insbesondere
- der Netzleistungsbedarf als zeitlicher Verlauf des Leistungsbedarfs ermittelt wird.

7. Verfahren nach einem der vorstehenden Ansprüche, **dadurch gekennzeichnet, dass**
- die Ladeinfrastruktur an wenigstens einem Netzanschlusspunkt an das elektrische Versorgungsnetz angeschlossen ist,
- die Austauschleistung zwischen der Ladeinfrastruktur und dem elektrischen Versorgungsnetz über diesen wenigstens einen Netzanschlusspunkt erfolgt
und
- das Bestimmen des Austauschleistungsverlaufs und/oder der Teilaustauschleistung insbesondere der Teilleistungsverläufe in Abhängigkeit von wenigstens einer Eigenschaft des wenigstens einen Netzanschlusspunktes erfolgt.

8. Verfahren nach einem der vorstehenden Ansprüche, **dadurch gekennzeichnet, dass**
- beim Bereitstellen der Teilaustauschleistungen ein bzw. der Gesamtladezustand kontinuierlich mittels einer zentralen Steuereinrichtung überwacht wird und mit einem bzw. dem vorgegebenen Ladezustandsverlauf verglichen wird,
und
- in Abhängigkeit von dem Vergleich Informationen und/oder Steuerbefehle von der zentralen Steuereinrichtung an die Leistungseinheiten übertragen werden, um das Bereitstellen der Teilaustauschleistungen nachzuregeln, wobei optional
- Ladezustände bzw. die Ladezustände der Leistungseinheiten überwacht werden und mit vorgegebenen Ladezuständen, insbesondere gemäß vorgegebenen Ladezustandsverläufen verglichen werden, um dadurch Teilabweichungen der Ladezustände der Leistungseinheiten zu erfassen, und wobei das Bereitstellen der Teilaustauschleistungen zusätzlich in Abhängigkeit von diesen Teilabweichungen nachgeregelt wird, und/oder dass
- das Bestimmen zukünftiger Teilleistungsverläufe in Abhängigkeit von diesen Teilabweichungen durchgeführt wird, und insbesondere eine Verteilungsvorschrift zum Bestimmen der Teilleistungsverläufe in Abhängigkeit von dem Austauschleistungsverlauf in Abhängigkeit von diesen Teilabweichungen angepasst wird.

9. Verfahren nach einem der vorstehenden Ansprüche, **dadurch gekennzeichnet, dass**
- eine Berechnung eines bzw. des Gesamtladezustands, und/oder
- eine Berechnung eines bzw. des Ladeenergiebedarfs der Ladeinfrastruktur
- wenigstens dann wiederholt wird, wenn wenigstens eines der Elektrofahrzeuge an die Ladeinfrastruktur angeschlossen oder davon getrennt wird.

10. Verfahren nach einem der vorstehenden Ansprüche, **dadurch gekennzeichnet, dass**
- beim Bereitstellen der Austauschleistung die Austauschleistung erfasst und mit einer Summe der bereitgestellten Teilaustauschleistungen verglichen wird, um eine Abweichung zu ermitteln, und
- in Abhängigkeit von der ermittelten Abweichung das Bereitstellen der Teilaustauschleistungen nachgeregelt wird, um die Abweichung zu verringern, wobei insbesondere
- die ermittelte Abweichung als über einen Prüfzeitraum ermittelte Abweichungsenergie berücksichtigt wird, wobei der Prüfzeitraum insbesondere als Zeitraum von Beginn des Steuerzeitraums bis zu einem aktuellen Zeitpunkt gewählt wird.

11. Verfahren nach einem der vorstehenden Ansprüche, **dadurch gekennzeichnet, dass**
- ein vorgegebener zeitlicher Verlauf des Gesamtladezustands als Ladezustandsverlauf aus dem Austauschleistungsverlauf bestimmt wird
- eine Abweichung eines erfassten Gesamtladezustandsverlaufs von dem vorgegebenen Ladezustandsverlauf als erfasste Abweichungsenergie berücksichtigt wird, und
- in Abhängigkeit von der erfassten Abweichungsenergie die Austauschteilleistungen insbesondere die Teilleistungsverläufe nachgeregelt werden, wobei vorzugsweise
- ein Nachregeln erst erfolgt, wenn die erfasste Abweichungsenergie dem Betrage nach eine vorgebbare Mindestabweichung erreicht.

12. Verfahren nach einem der vorstehenden Ansprüche, **dadurch gekennzeichnet, dass**
- für eine erste und wenigstens eine weitere Leistungseinheit, insbesondere Elektrofahrzeug, jeweils
- ein Teilladezustandsverlauf vorgegeben wird, insbesondere aus ihrem Teilleistungsverlauf berechnet wird, und
- eine Teilabweichung zwischen einem erfassten Teilladezustand und einem durch den Teilladezustandsverlauf vorgegebenen Teilladezustand erfasst wird, und wobei
- für die erste Leistungseinheit in Abhängigkeit von ihrer Teilabweichung ihre Teilaustauschleistung und/oder ihr vorgegebener Teilleistungsverlauf verändert werden, um ihre Teilabweichung dem Betrage nach zu verringern, wobei ihre Veränderung zu einer Veränderung des Austauschleistungsverlaufs und/oder eines bzw. des Gesamtladezustands führt und
- für die wenigstens eine weitere Leistungseinheit ihre Teilaustauschleistung und/oder ihr vorgegebener Teilleistungsverlauf unter Berücksichtigung ihrer Teilabweichung verändert wird, um der Veränderung des Austauschleistungsverlaufs bzw. des Gesamtladezustands durch die erste Leistungseinheit entgegenzuwirken, wobei insbesondere
- die Veränderungen der ersten und wenigstens einen weiteren Leistungseinheit so durchgeführt werden, dass ihre Teilabweichungen jeweils dem Betrage nach eine vorgebbare Maximalabweichung nicht überschreiten, wobei dann,
- wenn wenigstens eine Teilabweichung dem Betrage nach die vorgebbare Maximalabweichung überschreitet, der vorgegebene Austauschleistungsverlauf und/oder der vorgegebene Ladezustandsverlauf verändert wird.

13. Verfahren nach einem der vorstehenden Ansprüche, **dadurch gekennzeichnet, dass**
- wenigstens eine der Leistungseinheiten als steuerbarer elektrischer Verbraucher ohne elektrischen Speicher ausgebildet ist und/oder
- wenigstens ein bzw. der steuerbare Verbraucher und/oder wenigstens ein steuerbarer Erzeuger der Ladeinfrastruktur so gesteuert wird, dass
- ein Verändern der Teilleistungsverläufe so ausgeglichen wird, dass die Austauschleistung den vorgegebenen Austauschleistungsverlauf einhält.

14. Verfahren nach einem der vorstehenden Ansprüche, **dadurch gekennzeichnet, dass**
- in Abhängigkeit von dem vorgegebenen Austauschleistungsverlauf ein Zielladezustand als am Ende des Steuerzeitraums erwarteter Gesamtladzustand ermittelt wird,
- bei oder nach Erreichen des Endes des Steuerzeitraumes ein Endladezustand als tatsächlicher Gesamtladzustand am Ende des Steuerzeitraums erfasst wird und
- in Abhängigkeit von einem Ergebnisvergleich als Vergleich des Endladezustands mit dem Zielladezustand, ein bzw. der Ladeenergiebedarf für einen weiteren Steuerzeitraum ermittelt wird, wobei insbesondere vorgesehen ist, dass
- der Ladeenergiebedarf mittels einer Berechnungsvorschrift ermittelt wird und
- in Abhängigkeit von dem Ergebnisvergleich die Berechnungsvorschrift oder der mittels der Berechnungsvorschrift ermittelte Ladeenergiebedarf verändert werden.

15. Verfahren nach einem der vorstehenden Ansprüche, **dadurch gekennzeichnet, dass**
- eine Abweichung zwischen tatsächlich ausgetauschter Austauschleistung und durch den Austauschleistungsverlauf vorgegebener Austauschleistung als Austauschleistungsabweichung erfasst wird
- der Ladeenergiebedarf mittels einer bzw. der Berechnungsvorschrift ermittelt wird und
- in Abhängigkeit von der Austauschleistungsabweichung der Ladeenergiebedarf für einen weiteren Steuerzeitraum ermittelt wird, insbesondere dass
- in Abhängigkeit von der Austauschleistungsabweichung die Berechnungsvorschrift oder der mittels der Berechnungsvorschrift ermittelte Ladeenergiebedarf verändert werden.

16. Ladeinfrastruktur zum Austauschen einer Austauschleistung mit einem elektrischen Versorgungsnetz, wobei- mehrere Leistungseinheiten zum Abgeben oder Aufnehmen elektrischer Leistung an die Ladeinfrastruktur anschließbar sind, um elektrische Leistung zwischen den Leistungseinheiten und dem elektrischen Versorgungsnetz über die Ladeinfrastruktur auszutauschen, und
- mehrere der Leistungseinheiten jeweils als Elektrofahrzeug ausgebildet sind, sodass mehrere Elektrofahrzeuge jeweils an die Ladeinfrastruktur anschließbar sind, um elektrische Leistung zwischen den Elektrofahrzeugen und dem elektrischen Versorgungsnetz über die Ladeinfrastruktur auszutauschen und die Elektrofahrzeuge dadurch zu laden oder zu entladen,
und die Ladeinfrastruktur weist eine zentrale Steuereinheit auf, die vorbereitet ist, zum
- Bestimmen einer Energievorgabe für einen Steuerzeitraum, die wenigstens die Energiemenge vorgibt, die die Ladeinfrastruktur in dem Steuerzeitraum aus dem elektrischen Versorgungsnetz beziehen soll,
- Vorgeben einer Leistungsbegrenzung, die wenigstens eine Grenze für die Austauschleistung angibt, die von der Ladeinfrastruktur bereitgestellt werden kann,
- Vorgeben eines Austauschleistungsverlaufs (P(t)) in Abhängigkeit von
- der Energievorgabe (E(t)) und
- der Leistungsbegrenzung, wobei
- der Austauschleistungsverlauf für die Ladeinfrastruktur einen zeitlichen Verlauf der Austauschleistung für den Steuerzeitraum vorgibt,
- Bestimmen von Teilaustauschleistungen für die Leistungseinheiten, die jeweils von der Leistungseinheit bereitzustellen ist, wobei
- die Summe der Teilaustauschleistungen der Austauschleistung im Wesentlichen entspricht,
- das Bestimmen der Teilaustauschleistungen in Abhängigkeit von Ladezuständen der Leistungseinheiten erfolgt und
- das Bestimmen der Teilaustauschleistungen unter Berücksichtigung von Teilleistungsgrenzen der Leistungseinheiten erfolgt, und
- Bereitstellen der Teilaustauschleistungen durch die Leistungseinheiten, um dadurch die Austauschleistung zwischen der Ladeinfrastruktur und dem elektrischen Versorgungsnetz bereitzustellen, wobei insbesondere vorgesehen ist, dass
die Ladeinfrastruktur, insbesondere die zentrale Steuereinheit, dazu vorbereitet ist, ein Verfahren gemäß einem der Ansprüche 1 bis 15 auszuführen.

17. Ladestation zum Laden von Elektrofahrzeugen, wobei die Ladestation eine Ladeinfrastruktur nach Anspruch 14 oder 15 aufweist.
